(19) **Europäisches Patentamt / European Patent Office / Office européen des brevets**

(11) **EP 4 715 021 A1**

(12) # EUROPEAN PATENT APPLICATION
published in accordance with Art. 153(4) EPC

(43) Date of publication:
**25.03.2026 Bulletin 2026/13**

(21) Application number: **24807225.8**

(22) Date of filing: **15.05.2024**

(51) International Patent Classification (IPC):
***C09J 167/00*** (2006.01)   ***C09J 175/04*** (2006.01)
***C09J 175/08*** (2006.01)

(52) Cooperative Patent Classification (CPC):
**C09J 167/00; C09J 175/04; C09J 175/08**

(86) International application number:
**PCT/JP2024/017944**

(87) International publication number:
**WO 2024/237274 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.05.2023  JP 2023081086
16.05.2023  JP 2023081088
21.07.2023  JP 2023119125

(71) Applicant: **Mitsubishi Chemical Corporation
Tokyo 100-8251 (JP)**

(72) Inventors:
• **NAKANE, Takayuki
Tokyo 100-8251 (JP)**
• **HIRONISHI, Masato
Tokyo 100-8251 (JP)**

(74) Representative: **Hoffmann Eitle
Patent- und Rechtsanwälte PartmbB
Arabellastraße 30
81925 München (DE)**

(54) **ADHESIVE AND REACTIVE HOT-MELT ADHESIVE**

(57)   The present invention pertains to an adhesive containing a polyester (A) that satisfies the following requirements (1)-(4): (1) the polyester (A) has a structural moiety derived from a polycarboxylic acid (a1) and a structural moiety derived from a polyhydric alcohol (a2); (2) the polyester (A) has an ester bond concentration of not more than 10.00 millimoles/g; (3) the polyester (A) has a melting point of 30°C or higher; and (4) the polyester (A) has a mass average molecular weight of 25,000 or more.

**Description**

Technical Field

The present invention relates to an adhesive and a reactive hot-melt adhesive.

Background Art

Polyester-based resins that have been known are excellent in heat resistance, chemical resistance, durability, and mechanical strength, and thus have been used in a wide range of applications such as films, plastic bottles, fibers, toners, electrical parts, adhesives, and pressure-sensitive adhesives. Polyester-based resins also have high polarity because of their polymer structure, and thus it is known that polyester-based resins exhibit excellent adhesiveness to polar polymers such as polyester, polyvinyl chloride, polyimide, and epoxy resins, and metal materials such as copper and aluminum.

In recent years, from the viewpoint of environmental compatibility, a hot-melt adhesive that can be applied without a solvent is required.

The hot-melt adhesive is an adhesive that is solid or semi-solid at room temperature and melts with heating to have fluidity. In particular, a hot-melt adhesive containing a urethane prepolymer having an isocyanate group at a terminal as a main component is referred to as a reactive hot-melt adhesive. Most of the reactive hot-melt adhesives are moisture curable urethane adhesives, and usually have a form of an isocyanate group-containing urethane prepolymer produced through addition polymerization of a polyol component and an isocyanate component.

These reactive hot-melt adhesives are applied to a base material in a heated and melted state, and after cooling and solidification, moisture curing occurs because of a chemical crosslinking reaction between an isocyanate group and water, which forms a tough film, that is, an adhesive layer, having heat resistance and chemical resistance.

For example, Patent Documents 1 and 2 describe reactive hot-melt adhesives using polyester polyols. Patent Document 3 describes a reactive hot-melt adhesive in which an acrylic polymer is added as a high-molecular-weight component.

Citation List

Patent Document

Patent Document 1: JP 2007-523240 T
Patent Document 2: JP 2018-512472 T
Patent Document 3: JP 2008-500406 T

Summary of Invention

Technical Problem

As described in Patent Document 1, in recent years, not only adhesiveness and strength after moisture curing but also high adhesiveness and strength before moisture curing are required from the viewpoint of improving productivity (hereinafter, the strength after moisture curing is also referred to as "final strength", and the strength before moisture curing is also referred to as "initial strength").

Thus, to improve the initial strength, Patent Document 1 describes a method of using a crystalline polyol using a linear aliphatic dicarboxylic acid having 13 to 22 methylene groups.

As a method for improving the initial strength, Patent Document 2 also describes a method of using a crystalline polyester polyol.

However, in the system of only a low-molecular-weight polyol and isocyanate as described above, a high-molecular-weight component is not present at a stage before moisture curing. Thus, the cohesive force is insufficient, and it may be difficult to develop a high level of initial strength required in recent years. On the other hand, when the design is made such that the initial strength is easily exhibited with the cohesive force derived from the crystallinity by increasing the amount of the crystalline polyol, the adhesion to an adherend interface deteriorates because of the crystallinity, and the final strength may deteriorate. Under such circumstances, it has been difficult to achieve both of the initial strength and the final strength at a high level.

In Patent Document 3, both of the initial strength and the final strength are achieved by containing an acrylic polymer as a high-molecular-weight component in an adhesive, but unfortunately, the acrylic polymer is likely to generate odor and volatile organic compounds (VOC) derived from a residual monomer and a chain transfer agent, and it is difficult to make a high biomass design which has become important from the viewpoint of environmental compatibility in recent years.

Thus, the present inventor and co-workers have studied the design of a high-molecular-weight polyester suitable also for a reactive hot-melt adhesive. Polyester may have an advantage that a high biomass design is easily made and VOC is reduced as compared with that of an acrylic polymer. On the other hand, when the polyester has a high molecular weight, issues may occur such as poor solubility to a liquid polyol generally used for a reactive hot-melt adhesive and difficulty in handling in a solventless system with a resin composition that is easily dissolved. For example, an issue that handling in a pellet or flake shape cannot be performed because of its properties occurs. Thus, application of a high-molecular-weight polyester to a hot-melt adhesive has been difficult.

Solution to Problem

The present invention provides an adhesive containing a polyester (A) satisfying requirements (1) to (4) described below:

> (1) the polyester (A) has a structural site derived from a polyvalent carboxylic acid (a1) and a structural site derived from a polyhydric alcohol (a2);
> (2) the polyester (A) has an ester bond concentration of 10.00 mmol/g or less;
> (3) the polyester (A) has a melting point of 30°C or higher; and
> (4) the polyester (A) has a mass-average molecular weight of 25000 or more.

More specifically, the present invention is as follows.

Aspect 1 of the present invention provides an adhesive containing a polyester (A) satisfying requirements (1) to (4) described below:

> (1) the polyester (A) has a structural site derived from a polyvalent carboxylic acid (a1) and a structural site derived from a polyhydric alcohol (a2);
> (2) the polyester (A) has an ester bond concentration of 10.00 mmol/g or less;
> (3) the polyester (A) has a melting point of 30°C or higher; and
> (4) the polyester (A) has a mass-average molecular weight of 25000 or more.

Aspect 2 of the present invention provides the adhesive according to aspect 1, wherein the polyester (A) further satisfies requirement (5) described below:
(5) the polyester (A) contains 50 mol% or more of a structural site derived from an aliphatic polyvalent carboxylic acid (a1-1) with respect to a total amount of the structural site derived from a polyvalent carboxylic acid (a1).
Aspect 3 of the present invention provides the adhesive according to aspect 1 or 2, wherein the polyester (A) further satisfies requirement (6) described below:
(6) the polyester (A) has a hydroxyl value of less than 12 mgKOH/g.
Aspect 4 of the present invention provides the adhesive according to any one of aspects 1 to 3, wherein the polyester (A) has a solubility parameter (SP value) of 10.50 $(cal/cm^3)^{1/2}$ or less.
Aspect 5 of the present invention provides the adhesive according to any one of aspects 1 to 4, wherein the adhesive contains 5 mass% or less of an organic solvent.
Aspect 6 of the present invention provides the adhesive according to any one of aspects 1 to 5, wherein the adhesive contains 30 mass% or less of a structural site derived from a monomer having an aromatic ring with respect to a total amount of the polyester (A).
Aspect 7 of the present invention provides the adhesive according to any one of aspects 1 to 6, wherein the polyester (A) has a glass transition temperature of 0°C or lower.
Aspect 8 of the present invention provides the adhesive according to any one of aspects 1 to 7, wherein the polyester (A) has a crystal melting heat of 3 J/g or higher.
Aspect 9 of the present invention provides the adhesive according to any one of aspects 1 to 8, wherein the polyester (A) has a mass-average molecular weight of 30000 or more.
Aspect 10 of the present invention provides the adhesive according to any one of aspects 1 to 9, wherein the polyester (A) has a mass-average molecular weight of 40000 or more.
Aspect 11 of the present invention provides a reactive hot-melt adhesive containing a urethane prepolymer (X) having an isocyanate group, wherein the reactive hot-melt adhesive contains the adhesive described in any one of aspects 1 to 10.

Aspect 12 of the present invention provides the reactive hot-melt adhesive according to aspect 11, wherein the urethane prepolymer (X) has a structural site derived from a polyalkylene glycol (B).

Aspect 13 of the present invention provides the reactive hot-melt adhesive according to aspect 12, wherein the polyalkylene glycol (B) has an average molecular weight in a range from 200 to 5000.

Aspect 14 of the present invention is the reactive hot-melt adhesive according to any one of aspects 11 to 13, wherein the urethane prepolymer (X) has a structural site derived from a polyester polyol (C) different from the polyester (A).

Aspect 15 of the present invention provides the reactive hot-melt adhesive according to aspect 14, wherein the polyester polyol (C) has an average molecular weight in a range from 500 to 5500.

Advantageous Effects of Invention

The polyester used in the adhesive of the present invention is, for example, a resin that has excellent handleability and can be handled in a pellet shape, and is soluble in a liquid polyol such as polypropylene glycol generally used in a reactive hot-melt adhesive. Thus, the polyester can be used for a hot-melt adhesive and a reactive hot-melt adhesive.

In addition, the polyester used in the present invention has a reduced VOC amount. Thus, the adhesive of one aspect of the present invention using such a polyester is excellent in low odor characteristics, and further, when the adhesive is made into a reactive hot-melt adhesive, both of the initial adhesive strength and the final adhesive strength can be achieved.

As a result of intensive studies, the present inventor and co-workers found a high-molecular-weight polyester to be used in an adhesive that has excellent solubility to a liquid polyol generally used in a reactive hot-melt adhesive and can be handled in a pellet shape, for example. The present inventor and co-workers thus have completed the present invention.

More surprisingly, the high-molecular-weight polyester used in the adhesive of the present invention has a reduced VOC amount as compared with that of a low-molecular-weight polyester polyol.

That is, the high-molecular-weight polyester used in the adhesive of the present invention can be suitably used as a raw material resin of a hot-melt adhesive and a reactive hot-melt adhesive.

This allows the design of hot-melt adhesives and reactive hot-melt adhesives that have not only both of the initial strength and the final strength at a high level but also low odor and low VOC.

Description of Embodiments

Hereinafter, the configurations of the present invention will be described in detail, but these illustrate examples of desirable embodiments.

In the present invention, "x and/or y (x and y are any structures or components)" means three combinations of only x, only y, and x and y.

1. Adhesive

An adhesive of the present embodiment contains a polyester (A) satisfying requirements (1) to (4) described below:

(1) the polyester (A) has a structural site derived from a polyvalent carboxylic acid (a1) and a structural site derived from a polyhydric alcohol (a2);
(2) the polyester (A) has an ester bond concentration of 10.00 mmol/g or less;
(3) the polyester (A) has a melting point of 30°C or higher; and
(4) the polyester (A) has a mass-average molecular weight of 25000 or more.

The adhesive of the present embodiment can be used as an adhesive, a hot-melt adhesive, or a reactive hot-melt adhesive. In addition, a high biomass design becomes possible by adjusting the polyester (A), and the adhesive of the present embodiment using the polyester (A) is excellent in low odor characteristics and environmental compatibility, and further, when the adhesive is used as a hot-melt adhesive or a reactive hot-melt adhesive, both of the initial adhesive strength and the final adhesive strength can be achieved.

The adhesive of the present embodiment contains a polyester (A) having a structural site derived from a polyvalent carboxylic acid (a1) and a structural site derived from a polyhydric alcohol (a2). First, the polyester (A) will be described.

Polyester (A)

The polyester (A) used in the adhesive of the present embodiment has a structural site derived from a polyvalent carboxylic acid (a1) and a structural site derived from a polyhydric alcohol (a2) in the molecule. The polyester (A) preferably contains 50 mol% or more of a structural site derived from an aliphatic polyvalent carboxylic acid (a1-1) with respect to the total amount of the structural site derived from a polyvalent carboxylic acid (a1).

When the structural site derived from an aliphatic polyvalent carboxylic acid (a1-1) is 50 mol% or more with respect to the total amount of the structural site derived from a polyvalent carboxylic acid (a1), excellent solubility to a liquid polyol such as polypropylene glycol generally used in a reactive hot-melt adhesive tends to be exhibited.

The amount of the structural site derived from an aliphatic polyvalent carboxylic acid (a1-1) is preferably 65 mol% or more, more preferably 75 mol% or more, still more preferably 85 mol% or more, particularly preferably 95 mol% or more with respect to the total amount of the structural site derived from a polyvalent carboxylic acid (a1).

Polyvalent Carboxylic Acid (a1)

Examples of the polyvalent carboxylic acid constituting the structural site derived from a polyvalent carboxylic acid (a1) include the aliphatic polyvalent carboxylic acid (a1-1) described later; aromatic polyvalent carboxylic acids described later; and alicyclic polyvalent carboxylic acids described later. One of the polyvalent carboxylic acids may be used alone or two or more thereof may be used in combination.

Examples of the aliphatic polyvalent carboxylic acid constituting the structural site derived from an aliphatic polyvalent carboxylic acid (a1-1) include linear aliphatic carboxylic acids such as succinic acid, glutaric acid, adipic acid, azelaic acid, sebacic acid, and dodecanedioic acid, and branched aliphatic polyvalent carboxylic acids such as dimer acids. Among these, to impart crystallinity to the polyester (A) to be produced and to make the polyester (A) excellent in handleability and adhesive strength as an adhesive, it is preferable to contain linear aliphatic carboxylic acids, and among these, it is more preferable to contain those having an even number of carbon atoms. In addition, it is preferable that the polyester (A) in the adhesive of the present embodiment contain an aliphatic polyvalent carboxylic acid having 8 or more carbon atoms to have excellent solubility to a liquid polyol such as polypropylene glycol generally used in a reactive hot-melt adhesive.

Examples of the dimer acids include dimer acids (mainly those having 36 to 44 carbon atoms) derived from oleic acid, linoleic acid, linolenic acid, erucic acid, and the like, and hydrogenated products thereof. Among these, a hydrogenated product is preferable from the viewpoint of suppressing gelation at the time of manufacturing a polyester-based resin.

The content of the structural site derived from an aliphatic polyvalent carboxylic acid (a1-1) is preferably 50 mol% or more, more preferably 65 mol% or more, still more preferably 75 mol% or more, especially preferably 85 mol% or more, particularly preferably 95 mol% or more with respect to the total amount of the structural site derived from a polyvalent carboxylic acid (a1). When the content of the structural site derived from an aliphatic polyvalent carboxylic acid (a1-1) is 50 mol% or more with respect to the total amount of the structural site derived from a polyvalent carboxylic acid (a1), excellent solubility to a liquid polyol such as polypropylene glycol generally used in a reactive hot-melt adhesive tends to be exhibited.

The content (mol%) of the structural site derived from an aliphatic polyvalent carboxylic acid (a1-1) with respect to the total amount of the structural site derived from a polyvalent carboxylic acid (a1) is obtained from Equation 1 shown below.

Content of aliphatic polyvalent carboxylic acid (mol%) = (aliphatic polyvalent carboxylic acid (mol)/ polyvalent carboxylic acid (mol)) × 100 [Equation (1)]

Examples of the aromatic polyvalent carboxylic acids include monocyclic aromatic polyvalent carboxylic acids such as terephthalic acid, isophthalic acid, dimethyl terephthalate, dimethyl isophthalate, and orthophthalic acid; and polycyclic aromatic polyvalent carboxylic acids such as biphenyldicarboxylic acid, naphthalenedicarboxylic acid, and dimethyl naphthalenedicarboxylate. Examples of the polycyclic aromatic polyvalent carboxylic acids include fused polycyclic aromatic polyvalent carboxylic acids such as naphthalenedicarboxylic acid and dimethyl naphthalenedicarboxylate, and derivatives thereof (aromatic dicarboxylic acids). Examples thereof also include aromatic oxycarboxylic acids such as p-hydroxybenzoic acid and 6-hydroxy-2-naphthoic acid. Further, examples of the aromatic polyvalent carboxylic acids further include trivalent or higher aromatic polyvalent carboxylic acids introduced for the purpose of imparting a branched skeleton or an acid value to a polyester-based resin. Examples of the trivalent or higher aromatic polyvalent carboxylic acids include trimellitic acid, trimesic acid, ethylene glycol bis(anhydrotrimellitate), glycerol tris(anhydrotrimellitate), trimellitic anhydride, pyromellitic dianhydride, oxydiphthalic dianhydride, 3,3',4,4'-benzophenonetetracarboxylic dianhydride, 3,3',4,4'-diphenyltetracarboxylic dianhydride, 3,3',4,4'-diphenylsulfonetetracarboxylic dianhydride, 4,4'-(hexafluoroisopropylidene)diphthalic dianhydride, and 2,2'-bis[(dicarboxyphenoxy)phenyl]propane dianhydride.

The content of the structural site derived from an aromatic polyvalent carboxylic acid with respect to the total amount of the polyvalent carboxylic acid (a1) is preferably 50 mol% or less, more preferably 30 mol% or less, still more preferably 15 mol% or less, particularly preferably 10 mol% or less. When the content of the aromatic polyvalent carboxylic acid is 50 mol% or less, excellent solubility to a liquid polyol such as polypropylene glycol generally used in a reactive hot-melt adhesive tends to be exhibited.

The content (mol%) of the aromatic polyvalent carboxylic acid with respect to the total amount of the polyvalent carboxylic acid (a1) is obtained from Equation 2 shown below.

$$\text{Content of aromatic polyvalent carboxylic acid (mol\%)} = (\text{aromatic polyvalent carboxylic acid (mol)}/ \text{polyvalent carboxylic acid (mol)}) \times 100 \qquad \text{[Equation (2)]}$$

The content of the structural site derived from an aromatic polyvalent carboxylic acid is preferably 30 mass% or less with respect to the total amount of the polyester (A), and is, more preferably, 20 mass% or less, 15 mass% or less, 10 mass% or less, 8 mass% or less, 6 mass% or less, 5 mass% or less, 4 mass% or less, or 2 mass% or less in order of preference. When the content of the structural site derived from an aromatic polyvalent carboxylic acid is 30 mass% or less with respect to the total amount of the polyester (A), the solubility of the polyester (A) in a liquid polyol such as polypropylene glycol generally used in a reactive hot-melt adhesive tends to be excellent.

In the case of imparting an acid value to the polyester (A), it is preferable to contain a structural site derived from a trivalent or higher polyvalent carboxylic acid as the structural site derived from a polyvalent carboxylic acid (a1). The valence of the carboxy group at the structural site derived from a trivalent or higher polyvalent carboxylic acid is preferably 3 to 6, more preferably 3 to 4. Examples of the trivalent or higher polyvalent carboxylic acid include the trivalent or higher aromatic polyvalent carboxylic acids described above. Examples thereof include trimellitic anhydride, trimellitic acids, and trimesic acids. Examples of the trivalent or higher polyvalent carboxylic acids other than those described above include hydrogenated trimellitic acid and hydrogenated trimellitic anhydride. Among these, those having an acid anhydride group are preferable, and a structural site derived from a trimellitic anhydride or a hydrogenated trimellitic anhydride is particularly preferable.

Examples of the alicyclic polyvalent carboxylic acid constituting the structural site derived from an alicyclic polyvalent carboxylic acid include 1,4-cyclohexanedicarboxylic acid, 1,3-cyclohexanedicarboxylic acid, 1,2-cyclohexanedicarboxylic acid, and acid anhydrides thereof.

The polyester (A) may have a structural site derived from an aromatic dicarboxylic acid having a sulfonate group such as a structural site derived from sulfoterephthalic acid, a structural site derived from 5-sulfoisophthalic acids, a structural site derived from 4-sulfophthalic acids, a structural site derived from 4-sulfonaphthalene-2,7-dicarboxylic acids, and a structural site derived from 5(4-sulfophenoxy)isophthalic acids, and a structural site derived from an aromatic dicarboxylic acid salt having a sulfonate group such as a metal salt or an ammonium salt thereof. From the viewpoint of the hygroscopicity of the polyester (A) and the solubility to a liquid polyol such as polypropylene glycol generally used in a reactive hot-melt adhesive, the content of the structural site derived from the aromatic dicarboxylic acid with respect to the total amount of the structural site derived from the polyvalent carboxylic acid (a1) is preferably 8 mol% or less, more preferably 5 mol% or less, particularly preferably 3 mol% or less, still more preferably 1 mol% or less, most preferably 0 mol%.

In the adhesive of the present embodiment, the structural site derived from a monomer having an aromatic ring is preferably 30 mass% or less with respect to the total amount of the polyester (A). When the structural site derived from a monomer having an aromatic ring is 30 mass% or less with respect to the total amount of the polyester (A), the solubility of the polyester (A) in a liquid polyol such as polypropylene glycol generally used in a reactive hot-melt adhesive tends to be excellent. The structural site derived from a monomer having an aromatic ring is, more preferably, 20 mass% or less, 15 mass% or less, 10 mass% or less, 8 mass% or less, 6 mass% or less, 5 mass% or less, 4 mass% or less, or 2 mass% or less with respect to the total amount of the polyester (A) in order of preference.

Examples of the monomer having an aromatic ring contained in the polyvalent carboxylic acid (a1) include the above-described aromatic polyvalent carboxylic acids.

In the polyester (A), at least one of the structural site derived from a polyvalent carboxylic acid (a1) or the structural site derived from a polyhydric alcohol (a2) preferably has a structural site derived from a monomer having a molecular weight of 320 or more. This makes it possible to reduce the ester bond concentration while maintaining the crystallinity of the polyester, and thus, both of the handleability and the solubility to a liquid polyol such as polypropylene glycol, which is generally used in a reactive hot-melt adhesive, are easily achieved. From the above viewpoint, at least one of the structural site derived from a polyvalent carboxylic acid (a1) or the structural site derived from a polyhydric alcohol (a2) preferably has a structural site derived from a monomer having a molecular weight of 320 or more in an amount of 0.1 mol% or more, more preferably 0.5 mol% or more, still more preferably 1 mol% or more, particularly preferably 3 mol% or more.

Examples of the monomer having a molecular weight of 320 or more include aromatic polyvalent carboxylic acids such as ethylene glycol bis(anhydrotrimellitate), glycerol tris(anhydrotrimellitate), 3,3',4,4'-diphenylsulfonetetracarboxylic dianhydride, 4,4'-(hexafluoroisopropylidene)diphthalic dianhydride, and 2,2'-bis[(dicarboxyphenoxy)phenyl]propane dianhydride, and aliphatic polyvalent carboxylic acids such as dimer acids as those contained in the polyvalent carboxylic acids (a1). Among these, aliphatic polyvalent carboxylic acids are preferable, dimer acids are more preferable, and hydrogenated dimer acids are particularly preferable from the viewpoint of solubility to a liquid polyol such as polypropylene glycol generally used in a reactive hot-melt adhesive.

A plant-derived monomer is preferably contained as the monomer constituting the structural site derived from a polyvalent carboxylic acid (a1). Examples of the plant-derived monomer include succinic acid, glutaric acid, azelaic acid, sebacic acid, and dimer acids.

Polyhydric Alcohol (a2)

Examples of the polyhydric alcohol (a2) include aliphatic polyhydric alcohols, alicyclic polyhydric alcohols, aromatic polyhydric alcohols, and polyalkylene glycols. One of the polyhydric alcohols may be used alone or two or more thereof may be used in combination.

Examples of the aliphatic polyhydric alcohol constituting the structural site derived from aliphatic polyhydric alcohols include linear aliphatic alcohols such as ethylene glycol, 1,3-propanediol, 1,4-butanediol, 1,5-pentanediol, 1,6-hexanediol, 1,9-nonanediol, and 1,10-decanediol; and branched aliphatic diols such as 1,2-propylene glycol, 2-methyl-1,3-propanediol, neopentyl glycol, 3-methyl-1,5-pentanediol, 2-butyl-2-ethyl-1,3-propanediol, 2,4-diethyl-1,5-pentanediol, 2,2,4-trimethyl-1,3-pentanediol, and dimer diols. Among these, it is preferable to contain a linear aliphatic polyhydric alcohol to impart crystallinity to the polyester and make the polyester excellent in handleability and adhesive strength when the polyester is formed into an adhesive, and in particular, it is more preferable to contain a linear aliphatic polyhydric alcohol having an even number of carbon atoms. In addition, it is preferable that the polyester (A) in the adhesive of the present embodiment contain an aliphatic polyhydric alcohol having 4 or more carbon atoms to have excellent solubility to a liquid polyol such as polypropylene glycol generally used in a reactive hot-melt adhesive.

Examples of the dimer diols include dimer diols that are reductants of dimer acids (mainly those having 36 to 44 carbon atoms) derived from oleic acid, linoleic acid, linolenic acid, erucic acid, and the like, and hydrogenated products thereof. Among these, a hydrogenated product is preferable from the viewpoint of suppressing gelation at the time of manufacturing polyester.

The content of the aliphatic polyhydric alcohol is preferably 50 mol% or more, more preferably 60 mol% or more, still more preferably 70 mol% or more, particularly preferably 80 mol% or more with respect to the total amount of the structural site derived from a polyhydric alcohol (a2).

Further, for the purpose of further imparting a branched skeleton or a hydroxyl value to the polyester, a trivalent or higher aliphatic polyhydric alcohol such as glycerin, trimethylolethane, trimethylolpropane, or pentaerythritol may be contained.

Examples of the alicyclic polyhydric alcohol constituting the structural site derived from alicyclic polyhydric alcohols include 1,4-cyclohexanediol, 1,4-cyclohexanedimethanol, tricyclodecanediol, tricyclodecanedimethanol, and spiroglycol.

Examples of the aromatic polyhydric alcohol constituting the structural site derived from aromatic polyhydric alcohols include paraxylene glycol, metaxylene glycol, orthoxylene glycol, 1,4-phenylene glycol, ethylene oxide adducts of 1,4-phenylene glycol, and bisphenol skeleton-containing alcohols.

Examples of the bisphenol skeleton-containing alcohols include bisphenol A, bisphenol B, bisphenol E, bisphenol F, bisphenol AP, bisphenol BP, bisphenol P, bisphenol PH, bisphenol S, bisphenol Z, 4,4'-dihydroxybenzophenone, bisphenol fluorene, and hydrogenated products thereof, and glycols such as ethylene oxide adducts and propylene oxide adducts produced by adding 1 to several moles of ethylene oxide or propylene oxide to a hydroxy group of a bisphenol.

Examples of the polyalkylene glycol constituting the structural site derived from the polyalkylene glycol include polyethylene glycol, polypropylene glycol, and polytetramethylene glycol. Among these, polypropylene glycol and polytetramethylene glycol are preferable from the viewpoint of solubility to a liquid polyol such as polypropylene glycol generally used in a reactive hot-melt adhesive, and polytetramethylene glycol is most preferable from the viewpoint of reactivity.

The average molecular weight of the polyalkylene glycol is preferably 320 or more, more preferably 400 or more, particularly preferably 500 or more from the viewpoint of being able to reduce the ester bond concentration while maintaining the crystallinity of the polyester and easily achieving both of the handleability and the above-described solubility.

The average molecular weight of the polyalkylene glycol is an average molecular weight calculated from the hydroxyl value.

The content of the polyalkylene glycol is preferably from 5 mass% to 80 mass% with respect to the total amount of the polyester (A). From the viewpoint of the above-described solubility, the content of the polyalkylene glycol is preferably 5 mass% or more, more preferably 10 mass% or more, particularly preferably 20 mass% or more with respect to the total amount of the polyester (A). From the viewpoint of adhesive strength when used as an adhesive, the content of the polyalkylene glycol is preferably 80 mass% or less, more preferably 70 mass% or less, particularly preferably 60 mass% or less with respect to the total amount of the polyester (A).

When the polyester (A) contains a structural site derived from an alicyclic polyhydric alcohol and/or a structural site derived from an aromatic polyhydric alcohol, the total content of the structural site derived from an alicyclic polyhydric alcohol and the structural site derived from an aromatic polyhydric alcohol in the structural site derived from a polyhydric alcohol (a2) is preferably 50 mol% or less, more preferably 40 mol% or less, particularly preferably 30 mol% or less. When these contents are too large, the polyester (A) tends to be non-crystallized and inferior in handleability, or the solubility of the polyester (A) to a liquid polyol such as polypropylene glycol generally used in a reactive hot-melt adhesive tends to be inferior.

In the adhesive of the present embodiment, the structural site derived from a monomer having an aromatic ring is preferably 30 mass% or less with respect to the total amount of the polyester (A). The structural site derived from a monomer having an aromatic ring is, more preferably, 20 mass% or less, 15 mass% or less, 10 mass% or less, 8 mass% or less, 6 mass% or less, 5 mass% or less, 4 mass% or less, or 2 mass% or less with respect to the total amount of the polyester (A) in order of preference. When the structural site derived from a monomer having an aromatic ring is 30 mass% or less with respect to the total amount of the polyester (A), the solubility to a liquid polyol such as polypropylene glycol generally used in a reactive hot-melt adhesive tends to be excellent.

Examples of the monomer having an aromatic ring contained in the polyhydric alcohol (a2) include the above-described aromatic polyhydric alcohols.

In the polyester (A), at least one of the structural site derived from a polyvalent carboxylic acid (a1) or the structural site derived from a polyhydric alcohol (a2) preferably has a structural site derived from a monomer having a molecular weight of 320 or more. At least one of the structural site derived from a polyvalent carboxylic acid (a1) or the structural site derived from a polyhydric alcohol (a2) preferably has a structural site derived from a monomer having a molecular weight of 320 or more in an amount of 0.1 mol% or more, more preferably 0.5 mol% or more, still more preferably 1 mol% or more, particularly preferably 3 mol% or more.

Examples of the monomer having a molecular weight of 320 or more contained in the polyhydric alcohol (a2) include aliphatic polyhydric alcohols such as dimer diols, bisphenol skeleton-containing alcohols (excluding those having a molecular weight of less than 320), and polyalkylene glycols (excluding those having a molecular weight of less than 320). Among these, aliphatic polyhydric alcohols and polyalkylene glycols are preferable, dimer diols are more preferable, and hydrogenated dimer diols are particularly preferable from the viewpoint of the solubility of the polyester (A) to a liquid polyol such as polypropylene glycol generally used in a reactive hot-melt adhesive.

A plant-derived monomer is preferably contained as the monomer constituting the structural site derived from a polyhydric alcohol (a2). Examples of the plant-derived monomer include ethylene glycol, 1,3-propanediol, 1,4-butanediol, 1,10-decanediol, dimer diols, and glycerin.

Component of Polyester (A)

In the adhesive of the present embodiment, the structural site derived from a monomer having an aromatic ring is preferably 30 mass% or less with respect to the total amount of the polyester (A), and is more preferably, 20 mass% or less, 15 mass% or less, 10 mass% or less, 8 mass% or less, 6 mass% or less, 5 mass% or less, 4 mass% or less, or 2 mass% or less in order of preference.

Examples of the monomer having an aromatic ring other than the polyvalent carboxylic acid (a1) or the polyhydric alcohol (a2) include hydroxycarboxylic acids having an aromatic ring.

The polyester (A) used in the adhesive of the present embodiment may have at least one structural site selected from the group consisting of a structural site derived from trivalent or higher polyvalent carboxylic acids and a structural site derived from trivalent or higher polyhydric alcohols for the purpose of introducing a branched skeleton, that is, the polyester (A) may contain at least one selected from the group consisting of the trivalent or higher polyvalent carboxylic acids and the trivalent or higher polyhydric alcohols as a copolymerization component of the polyester (A). In particular, in the case of forming a crosslinked structure through moisture curing after reacting with an isocyanate to be described later in the reactive hot-melt adhesive, introduction of a branched skeleton increases the number of reaction points of the resin, and a high-strength adhesive layer having a high crosslinking density can be produced. Among these, trimethylolpropane is preferably contained from the viewpoint of versatility. When trivalent or higher polyvalent carboxylic acids or trivalent or higher polyhydric alcohols are used in the depolymerization reaction described later, trivalent or higher polyvalent carboxylic acids or polyhydric alcohols may be used separately from the polyvalent carboxylic acids or polyhydric alcohols used in the depolymerization reaction.

When at least one selected from the group consisting of trivalent or higher polyvalent carboxylic acids and trivalent or higher polyhydric alcohols is used for the purpose of introducing a branched skeleton into the polyester (A), the content of the trivalent or higher polyvalent carboxylic acid with respect to the total amount of the polyvalent carboxylic acid (a1) or the content of the trivalent or higher polyhydric alcohol with respect to the total amount of the polyhydric alcohol (a2) (excluding trivalent or higher polyvalent carboxylic acids and trivalent or higher polyhydric alcohols used in the depolymerization reaction) is preferably in the range from 0.1 to 5 mol%, more preferably from 0.3 to 3 mol%, still more preferably from 0.5 to 2 mol%. When the content of both or either of them is too large, mechanical properties such as elongation at break of a coating film formed through application of the adhesive deteriorate, adhesive strength tends to deteriorate, and gelation tends to occur during polymerization and during preparation of a reactive hot-melt adhesive.

Further, the polyester (A) used in the adhesive of the present embodiment may contain a structural site derived from a hydroxycarboxylic acid compound.

The hydroxycarboxylic acid compound is a compound having a hydroxy group and a carboxy group in the molecular structure.

Examples of the hydroxycarboxylic acid compound constituting the structural site derived from a hydroxycarboxylic acid compound include 5-hydroxyisophthalic acid, p-hydroxybenzoic acid, p-hydroxyphenylpropionic acid, p-hydroxyphenylacetic acid, 6-hydroxy-2-naphthoic acid, and 4,4-bis(p-hydroxyphenyl)valeric acid. One of these may be contained alone or two or more thereof may be contained in combination.

It is preferable that the adhesive of the present embodiment be substantially free from an organic solvent. Specifically, the content of the organic solvent in the adhesive is preferably 5 mass% or less, and particularly preferably 2 mass% or less.

Glass Transition Temperature (Tg) of Polyester (A)

The glass transition temperature (Tg) of the polyester (A) used in the adhesive of the present embodiment is preferably 0°C or lower, preferably -10°C or lower, more preferably -20°C or lower, particularly preferably -30°C or lower, still more preferably -40°C or lower, especially preferably -50°C or lower. When the glass transition temperature (Tg) is too high, the solubility of the polyester (A) to a liquid polyol such as polypropylene glycol generally used in a reactive hot-melt adhesive tends to be inferior.

The glass transition temperature (Tg) can be determined through measurement using a differential scanning calorimeter. The measurement is performed under the conditions of a measurement temperature range from -90 to 200°C and a temperature rise rate of 10°C/min.

Acid Value of Polyester (A)

The acid value of the polyester (A) used in the present invention is preferably 3 mgKOH/g or less, more preferably 2 mgKOH/g or less, particularly preferably 1 mgKOH/g or less. When the acid value is too high, hydrolysis of the polyester is promoted, and long-term durability in a wet heat environment tends to deteriorate.

The acid value (mgKOH/g) can be determined by dissolving 1 g of the polyester (A) in 30 g of a mixed solvent of toluene/methanol (e.g., toluene/methanol = 9/1 at a volume ratio), and performing neutralization titration in accordance with JIS K 0070.

In the present invention, the acid value of the polyester (A) is attributed to the content of the carboxy group in the polyester.

Hydroxyl Value of Polyester (A)

The hydroxyl value of the polyester (A) is preferably less than 20 mgKOH/g, and more preferably, less than 18 mgKOH/g, less than 16 mgKOH/g, less than 14 mgKOH/g, less than 12 mgKOH/g, less than 10 mgKOH/g, less than 8 mgKOH/g, and less than 6 mgKOH/g in order of preference. When the hydroxyl value is too high, it tends to be difficult to achieve both of the initial strength and the final strength at a high level when the adhesive of the present embodiment is used as a reactive hot-melt adhesive.

The hydroxyl value of the polyester (A) is determined by neutralization titration in accordance with JIS K 0070.

Ester Bond Concentration of Polyester (A)

The ester bond concentration of the polyester (A) is 10.00 mmol/g or less, preferably from 4.00 to 9.00 mmol/g, more preferably from 5.00 to 8.50 mmol/g, still more preferably from 6.00 to 8.00 mmol/g. When the ester bond concentration is too low, the polarity and elastic modulus of the polyester (A) are lowered, and thus the adhesiveness tends to be inferior. When the ester bond concentration is too high, the solubility of the polyester (A) to a liquid polyol such as polypropylene glycol generally used in a reactive hot-melt adhesive tends to be inferior.

The ester bond concentration (mmol/g) is the number of moles of ester bonds per gram of the polyester (A) and is determined, for example, by a calculated value from the feed amount. In the calculation method, the value is obtained by dividing the smaller number of feed moles of the polyvalent carboxylic acid (a1) and the polyhydric alcohol (a2) by the finished total mass. An example of the calculation equation is shown below.

When the feed amounts of the polyvalent carboxylic acid (a1) and the polyhydric alcohol (a2) are the same molar amount, either of the calculation equations described below may be used.

When a monomer having not only a carboxylic acid but also a hydroxy group is used, or the polyester is prepared from caprolactone or the like, the calculation method is appropriately changed.

When Amount of Polyvalent Carboxylic Acid (a1) Is Smaller

$$\text{Ester bond concentration (mmol/g)} = [(A1/\alpha 1 \times m1 + A2/\alpha 2 \times m2 + A3/\alpha 3 \times m3...)/Z] \times 1000$$

A: Feed amount (g) of polyvalent carboxylic acid (a1)
$\alpha$: Molecular weight of polyvalent carboxylic acid (a1)
m: Number of carboxy groups per molecule of polyvalent carboxylic acid (a1)
Z: Mass (g) of finished product

When Amount of Polyhydric Alcohol (a2) Is Smaller

$$\text{Ester bond concentration (mmol/g)} = [(B1/\beta 1 \times n1 + B2/\beta 2 \times n2 + B3/\beta 3 \times n3...)/Z] \times 1000$$

B: Feed amount (g) of polyhydric alcohol (a2)
$\beta$: Molecular weight of polyhydric alcohol (a2)
n: Number of hydroxy groups per molecule of polyhydric alcohol (a2)
Z: Mass (g) of finished product

The ester bond concentration can also be measured by a known method using NMR or the like. For example, the ester group concentration, composition, and composition ratio of the polyester (A) can be determined through 1H-NMR measurement (proton nuclear magnetic resonance spectrometry) or 13C-NMR measurement (carbon nuclear magnetic resonance spectrometry) at a resonance frequency of 400 MHz.

The concentration of the ester bond or other polar group other than the reactive functional group of the polyester (A) is preferably low from the viewpoint of low hygroscopicity and long-term durability in a wet heat environment, and/or from the viewpoint of solubility to a liquid polyol such as polypropylene glycol generally used in the reactive hot-melt adhesive described later.

Examples of the other polar group include an amide group, an imide group, a urethane group, a urea group, an ether group, and a carbonate group.

From the viewpoint of solubility to a liquid polyol such as polypropylene glycol generally used in a reactive hot-melt adhesive, the total concentration of the amide group, the imide group, the urethane group, and the urea group of the polyester (A) is preferably 3 mmol/g or less, more preferably 2 mmol/g or less, particularly preferably 1 mmol/g or less, still more preferably 0.5 mmol/g or less, most preferably 0.2 mmol/g or less.

Examples of the ether group include an alkyl ether group and a phenyl ether group, and from the viewpoint of low hygroscopicity and long-term durability in a wet heat environment, it is particularly preferable to reduce the concentration of the alkyl ether group. Alternatively, from the viewpoint of solubility to a liquid polyol such as polypropylene glycol generally used in a reactive hot-melt adhesive, it is particularly preferable to reduce the concentration of the phenyl ether group.

From the viewpoint of solubility to a liquid polyol such as polypropylene glycol generally used in a reactive hot-melt adhesive, the alkyl ether group concentration of the polyester (A) is preferably 4 mmol/g or less, and, more preferably, 3 mmol/g or less, 2 mmol/g or less, 1.5 mmol/g or less, 1 mmol/g or less, or 0.5 mmol/g or less in order of preference.

From the viewpoint of solubility to a liquid polyol such as polypropylene glycol generally used in a reactive hot-melt adhesive, the phenyl ether group concentration of the polyester (A) is preferably 5 mmol/g or less, and, more preferably, 4 mmol/g or less, 3 mmol/g or less, 2.5 mmol/g or less, 2 mmol/g or less, 1.5 mmol/g or less, 1 mmol/g or less, or 0.5 mmol/g or less in order of preference.

The carbonate group concentration of the polyester (A) is preferably 3 mmol/g or less, more preferably 2 mmol/g or less, particularly preferably 1 mmol/g or less, still more preferably 0.5 mmol/g or less, most preferably 0.2 mmol/g or less.

Solubility Parameter (SP Value) of Polyester (A)

The solubility parameter (SP value) of the polyester (A) used in the adhesive according to one aspect of the present invention is preferably 10.50 $(cal/cm^3)^{1/2}$ or less, and is, more preferably, from 8.50 to 10.40 $(cal/cm^3)^{1/2}$, from 8.60 to 10.30 $(cal/cm^3)^{1/2}$, from 8.70 to 10.25 $(cal/cm^3)^{1/2}$, from 8.80 to 10.15 $(cal/cm^3)^{1/2}$, and from 9.00 to 10.05 $(cal/cm^3)^{1/2}$ in order of preference. When the solubility parameter (SP value) is too high or too low, the solubility of the polyester (A) to a liquid polyol such as polypropylene glycol generally used in a reactive hot-melt adhesive tends to be inferior.

The solubility parameter (SP value) can be determined by a known Fedors method. This method is described in R. F. Fedors, Polym. Eng. Sci., 14(2), 147(1974), and in the structural formula of the compound to be determined, the evaporation energy and molar volume data of atoms and atomic groups are determined by the following equation:

$$\text{Solubility parameter} = (\Sigma\Delta ei/\Sigma\Delta vi)^{1/2}$$

wherein $\Delta ei$ and $\Delta vi$ represent the evaporation energy and the molar volume of atoms or atomic groups, respectively.

From each atomic group described in the above document, the solubility parameter (SP value) can be determined through calculation. However, when atoms and atomic groups that are not described in the above document are contained in the structure, the calculation is performed ignoring their structural parts.

Mass-Average Molecular Weight (Mw) of Polyester (A)

The mass-average molecular weight (Mw) of the polyester (A) used in the adhesive of the present embodiment is 25000 or more, preferably 30000 or more, more preferably 35000 or more, still more preferably 40000 or more, especially preferably 45000 or more, particularly preferably 50000 or more, and is preferably 300000 or less, more preferably 200000 or less, still more preferably 150000 or less, especially preferably 120000 or less, particularly preferably 100000 or less. The mass-average molecular weight (Mw) of the polyester (A) is preferably 25000 or more and 300000 or less.

When the mass-average molecular weight (Mw) is too low, it tends to be difficult to achieve both of the initial strength and the final strength at a high level in the form of a reactive hot-melt adhesive. When the mass-average molecular weight (Mw) is too high, the solution viscosity is too high, and thus, use as a hot-melt adhesive tends to be difficult.

The peak-top molecular weight (Mp) of the polyester (A) used in the adhesive of the present embodiment is preferably 30000 or more, more preferably 35000 or more, still more preferably 40000 or more, especially preferably 45000 or more, particularly preferably 50000 or more, and is preferably 300000 or less, more preferably 200000 or less, still more preferably 150000 or less, especially preferably 120000 or less, particularly preferably 100000 or less. The peak-top molecular weight (Mp) of the polyester (A) is preferably 35000 or more and 300000 or less.

When the peak-top molecular weight (Mp) is too low, it tends to be difficult to achieve both of the initial strength and the final strength at a high level in the form of a reactive hot-melt adhesive. When the peak-top molecular weight (Mp) is too high, the solution viscosity is too high, and thus, use as a hot-melt adhesive tends to be difficult.

The method for measuring the mass-average molecular weight (Mw) and the peak-top molecular weight (Mp) is as follows.

The mass-average molecular weight (Mw) and the peak-top molecular weight (Mp) can be measured by using a high performance liquid chromatograph ("ACQUITY APC system" manufactured by Waters Corporation) with a total of four columns in series: one ACQUITY APC XT 450, one ACQUIT Y APC XT 200, and two ACQUITY APC XT 45, and can be determined in terms of standard polystyrene molecular weight.

Crystallinity of Polyester (A)

In the adhesive of the present embodiment, the polyester (A) has crystallinity. The crystallinity as used herein can be confirmed with a differential scanning calorimeter, and refers to, for example, one in which an endothermic peak due to crystal melting is observed when measurement is performed in a measurement temperature range from -90 to 200°C and a temperature rise rate of 10°C/min. The measurement temperature range can be appropriately changed depending on the sample.

The crystal melting heat of the polyester (A) is preferably 3 J/g or higher. This is for imparting good handleability to the polyester-based resin. Further, the crystal melting heat is more preferably 15 J/g or higher, still more preferably 30 J/g or higher, especially preferably 40 J/g or higher, particularly preferably 50 J/g or higher, most preferably from 60 to 100 J/g from the viewpoint of initial strength and final strength in the form of a reactive hot-melt adhesive.

The crystal melting heat can be checked with a differential scanning calorimeter, and can be calculated from, for example, the area of an endothermic peak due to crystal melting observed when measurement is performed in a measurement temperature range from -90 to 200°C and a temperature rise rate of 10°C/min.

Melting Point of Polyester (A)

The melting point of the polyester (A) used in the adhesive of the present embodiment is 30°C or higher, preferably 35°C or higher, more preferably from 40 to 120°C, still more preferably from 45 to 100°C, particularly preferably from 50 to 90°C, and especially preferably from 55 to 80°C.

When the melting point is too low, the handleability of the polyester and the initial strength in the form of a reactive hot-melt adhesive tend to be inferior, and when the melting point is too high, the solubility to a liquid polyol such as polypropylene glycol generally used in a reactive hot-melt adhesive tends to be inferior, or the adhesion to an adherend deteriorates, and thus the final strength in the form of a reactive hot-melt adhesive tends to be insufficient.

The method for measuring the melting point is as follows.

The melting point can be determined through measurement using a differential scanning calorimeter. The measurement is performed under the conditions of a measurement temperature range from -90 to 200°C and a temperature rise rate of 10°C/min.

Manufacturing of Polyester (A)

The polyester (A) of the present invention can be manufactured by using the above-described polyvalent carboxylic acid (a1) and the above-described polyhydric alcohol (a2) as raw materials, and performing a polycondensation reaction by a known method in the presence of a catalyst. That is, because the polyester (A) is produced through polycondensation reaction of the polyvalent carboxylic acid (a1) and the polyhydric alcohol (a2), the polyester (A) has a structural site derived from a polyvalent carboxylic acid (a1) and a structural site derived from polyhydric alcohol (a2). In the polycondensation reaction, first, an esterification reaction or a transesterification reaction is performed, and then a polycondensation reaction is performed. When it is not necessary to have a high molecular weight, it may be manufactured only by an esterification reaction or a transesterification reaction.

As the blending ratio of the polyvalent carboxylic acid (a1) and the polyhydric alcohol (a2), the polyhydric alcohol (a2) is preferably from 1 to 3 equivalents, particularly preferably from 1.1 to 2.2 equivalents, still more preferably from 1.2 to 1.7 equivalents per equivalent of the polyvalent carboxylic acid (a1). When the blending ratio of the polyhydric alcohol (a2) is too low, the acid value tends to increase, and it tends to be difficult to increase the molecular weight. When the blending ratio is too high, the yield tends to decrease.

Esterification Reaction or Transesterification Reaction

In the esterification reaction or the transesterification reaction, a catalyst is usually used. Specific examples thereof include catalysts such as titanium-based catalysts, for example, tetraisopropyl titanate and tetrabutyl titanate, antimony-based catalysts such as antimony trioxide, and germanium-based catalysts such as germanium dioxide, and catalysts such as zinc acetate, manganese acetate, and dibutyltin oxide. One, or two or more of these catalysts are used. Among these, antimony trioxide, tetrabutyl titanate, germanium dioxide, and zinc acetate are preferable from the viewpoint of the balance between the high catalytic activity and the hue of the reactant to be produced.

The blending amount of the catalyst is preferably from 1 to 10000 ppm, particularly preferably from 10 to 5000 ppm, still more preferably from 20 to 3000 ppm with respect to all copolymerization components (mass basis). When the blending amount is too small, the polymerization reaction tends not to proceed sufficiently. When the blending amount is too large, there is no advantage such as reduction in reaction time, and side reactions tend to occur.

The reaction temperature during the esterification reaction or the transesterification reaction is preferably from 200 to 300°C, particularly preferably from 210 to 280°C, still more preferably from 220 to 260°C. When the reaction temperature is too low, the reaction tends not to proceed sufficiently, and when the reaction temperature is too high, side reactions such as decomposition tend to occur. The pressure during the reaction is usually normal pressure, but it is also preferable to increase the reaction temperature by performing a pressurized reaction to efficiently advance the reaction.

As the reaction conditions of the polycondensation reaction performed after the esterification reaction or the transesterification reaction is performed, it is preferable that a similar amount of the same catalyst as that used in the esterification reaction or the transesterification reaction be further blended, the reaction temperature be set to preferably from 220 to 280°C, particularly preferably from 230 to 270°C, the reaction system be gradually reduced in pressure, and the reaction be finally performed at 5 hPa or less. When the reaction temperature is too low, the reaction tends not to proceed sufficiently, and when the reaction temperature is too high, side reactions such as decomposition tend to occur.

When a polyester having a carboxy group in a side chain is produced, a method of reacting a polyvalent carboxylic anhydride with a hydroxy group-containing prepolymer produced by copolymerizing the polyvalent carboxylic acid (a1) excluding the polyvalent carboxylic anhydride and the polyhydric alcohol (a2) is preferable from the viewpoint of productivity.

The temperature in the esterification reaction of the polyvalent carboxylic acid (a1) and the polyhydric alcohol (a2) is usually from 180 to 280°C, and the reaction time is usually from 60 minutes to 8 hours.

The temperature in the polycondensation is usually from 200 to 280°C, and the reaction time is usually from 20 minutes to 4 hours. The polycondensation is preferably carried out under reduced pressure.

The polyester (A) can be manufactured by a well-known method different from the above method, for example, by subjecting a polyvalent carboxylic acid (a1) and a polyhydric alcohol (a2) to an esterification reaction in the presence of a catalyst as necessary to produce a prepolymer, then performing polycondensation, and further performing depolymerization.

In the depolymerization, it is preferable to use a trivalent or higher polyvalent carboxylic acid from the viewpoint of adhesive strength. As the trivalent or higher polyvalent carboxylic acid, those described in the polyvalent carboxylic acid (a1) can be used. Among these, trivalent or higher polyvalent carboxylic acids having one acid anhydride group are preferable, and a trimellitic anhydride or a hydrogenated trimellitic anhydride is more preferable from the viewpoint of suppressing a decrease in molecular weight.

The temperature in the depolymerization is usually from 200 to 260°C, and the reaction time is usually from 10 minutes to 5 hours.

In the depolymerization, when the amount of the trivalent or higher polyvalent carboxylic acid is more than 20 mol% per 100 mol% of the total amount of the polyvalent carboxylic acid (a1), the molecular weight of the polyester (A) may significantly decrease. Thus, when the total amount of the polyvalent carboxylic acid (a1) is 100 mol%, the depolymerization is preferably performed using 20 mol% or less of the trivalent or higher polyvalent carboxylic acid, more preferably from 1 to 15 mol%, particularly preferably from 2 to 10 mol%, still more preferably from 3 to 8 mol%.

The polyester (A) to be used in the adhesive of the present embodiment can be thus produced.

The polyester (A) to be used in the adhesive of the present embodiment is a resin that is solid at ambient temperature, can be handled in a pellet shape for example, has excellent handleability, and is soluble in a liquid polyol such as polypropylene glycol which is generally used in a reactive hot-melt adhesive. Thus, the polyester can be used for a hot-melt adhesive or a reactive hot-melt adhesive.

In addition, because the VOC amount is small, and high biomass design is possible, the adhesive of the present embodiment using the polyester is excellent in low odor characteristics and environmental compatibility, and further, from the viewpoint of being able to achieve both of the initial adhesive strength and the final adhesive strength when the adhesive is used as a hot-melt adhesive or a reactive hot-melt adhesive, the adhesive is very useful as a raw material of a hot-melt adhesive or a reactive hot-melt adhesive.

The adhesive of the present embodiment can also be used as a hot-melt adhesive, in particular, a reactive hot-melt adhesive.

2. Hot-Melt Adhesive, Reactive Hot-Melt Adhesive

Hot-Melt Adhesive

The adhesive described above can be contained in a hot-melt adhesive of the present embodiment. The hot-melt adhesive is solid or semi-solid at room temperature, melts with heating to have fluidity, and can be used as an adhesive that is disposed between members to be joined to bond the members to each other. That is, the hot-melt adhesive can be used as a hot-melt adhesive. The hot-melt adhesive preferably contains substantially no organic solvent, and the content of the organic solvent is preferably 5 wt.%% or less with respect to the total amount of the hot-melt adhesive.

The hot-melt adhesive contains at least an adhesive containing the polyester (A). The hot-melt adhesive may contain at least one of the group consisting of a polyalkylene glycol (B), a polyester polyol (C) different from the polyester (A) (hereinafter, also simply referred to as "polyester polyol (C)"), and an isocyanate.

Method for Manufacturing Hot-Melt Adhesive

The hot-melt adhesive can be manufactured by, for example, adding a resin other than the polyester (A), a polyol component, and an additive to the polyester (A) as necessary to adjust the melt viscosity to a desired value.

Reactive Hot-Melt Adhesive

The adhesive and the hot-melt adhesive described above can also be used as a reactive hot-melt adhesive. The reactive hot-melt adhesive contains the adhesive containing the polyester (A). The reactive hot-melt adhesive preferably contains substantially no organic solvent, and the amount of the organic solvent is preferably 5 mass% or less, particularly preferably 2 mass% or less with respect to the total amount of the reactive hot-melt adhesive.

By adjusting the polyester (A), such a reactive hot-melt adhesive becomes a reactive hot-melt adhesive having a high biomass degree that not only achieves both of the initial strength and the final strength at a high level, but also has low odor and low VOC, and further, is excellent in environmental compatibility.

The reactive hot-melt adhesive contains a reactive group, and examples of the reactive group include an isocyanate group. The reactive hot-melt adhesive preferably contains a urethane prepolymer (X) having an isocyanate group. The urethane prepolymer (X) preferably contains a structural site derived from the polyalkylene glycol (B). The urethane prepolymer (X) preferably contains a structural site derived from a polyester polyol (C) different from the polyester (A).

The urethane prepolymer (X) may contain a structural site derived from the polyester (A).

That is, the reactive hot-melt adhesive contains the adhesive containing the polyester (A), and the urethane prepolymer (X) may or may not contain the adhesive.

Method for Manufacturing Reactive Hot-Melt Adhesive

A reactive hot-melt adhesive containing the urethane prepolymer (X) having an isocyanate group, which is an example of the reactive hot-melt adhesive, can be manufactured, for example, by dissolving the polyester (A) in the polyalkylene glycol (B) or another liquid polyol, then adding isocyanate thereto, and heating and mixing the resultant mixture to produce a urethane prepolymer.

The polyester polyol (C) may be added to the polyalkylene glycol or another liquid polyol together with the polyester (A), and dissolved by heating and mixing. Alternatively, the polyester (A) may be dissolved in the polyalkylene glycol (B) or another liquid polyol, and then the polyester polyol (C) and isocyanate may be simultaneously added, heated, and mixed.

The reactive hot-melt adhesive can contain an additional additive as long as the reaction of the isocyanate with the polyester (A) forming the urethane prepolymer (X), the polyalkylene glycol (B), and the polyester polyol (C) is not adversely affected. The timing of addition is not particularly limited, but for example, in synthesizing the urethane prepolymer (X), an additive may be added together with the polyester (A), the polyalkylene glycol (B), the polyester polyol (C), and the isocyanate. Alternatively, first, the polyester (A), the polyalkylene glycol (B), the polyester polyol (C), and the isocyanate are reacted to synthesize the urethane prepolymer (X), and then an additive may be added. As the additive, the same additives as the additives described later as an additional additive for the hot-melt adhesive can be used.

The heating temperature is preferably in the range from 80 to 160°C, more preferably from 100 to 140°C. When the heating temperature is within this range, the dissolution of each component is favorable, the viscosity is reduced, and the handling properties are favorable. Further, the reaction of the isocyanate with the polyester (A), the polyalkylene glycol (B), and the polyester polyol (C) sufficiently proceeds.

Polyalkylene Glycol (B)

Specific examples of the polyalkylene glycol (B) component include polyalkylene glycols having two or more glycol units such as polymethylene glycol, polyethylene glycol, polypropylene glycol, polytetramethylene glycol, polyhexamethylene glycol, and copolymers of ethylene oxide and propylene oxide, and branched polyalkylene glycols using polyfunctional alcohols such as glycerin. Among these, polypropylene glycol is preferable as the polyalkylene glycol (B) component because it is liquid at ambient temperature and has excellent property of dissolving the polyester (A). One of these may be used alone or two or more thereof may be used in combination.

The average molecular weight of the polyalkylene glycol (B) is preferably from 200 to 5000, more preferably from 700 to 3000. When the average molecular weight is 200 or more, the adhesive strength of the hot-melt adhesive after curing becomes favorable, and when the average molecular weight is 5000 or less, the viscosity of the hot-melt adhesive or reactive hot-melt adhesive is low, and the coatability becomes favorable.

The average molecular weight of the polyalkylene glycol is an average molecular weight calculated from the hydroxyl value.

Polyester Polyol (C)

As the polyester polyol (C), crystalline polyester polyols and amorphous polyester polyols are known, and crystalline polyester polyols are preferable from the viewpoint of initial strength. Specific examples thereof include aliphatic polyester polyols and aromatic polyester polyols. The crystalline polyester polyol and the amorphous polyester polyol are easily distinguished from each other through differential scanning calorimetry (DSC). The melting point of the crystalline polyester polyol is observed as an endothermic peak during temperature rise and as an exothermic peak during temperature fall in DSC measurement.

The melting point of the amorphous polyester polyol is not clearly observed when measured through DSC, and thus, it is possible to distinguish the amorphous polyester polyol from the crystalline polyester polyol.

The aliphatic polyester polyol can be produced through reaction of an aliphatic dicarboxylic acid with a diol.

Examples of the aliphatic dicarboxylic acid include succinic acid, glutaric acid, adipic acid, azelaic acid, sebacic acid, and decamethylene dicarboxylic acid. One of these may be used alone or two or more thereof may be used in combination.

Examples of the diol include low-molecular-weight diols having 2 to 12 carbon atoms such as ethylene glycol, 1-ethyl ethylene glycol, propylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, neopentyl glycol, 2-methyl-1,3-propanediol, 3,-methyl-1,5-pentanediol, cyclohexanedimethanol, and 2,4-diethyl-1,5-pentanediol.

The diol is preferably at least one selected from the group consisting of ethylene glycol, 1,4-butanediol, 1,6-hexanediol, 1,8-octanediol, and 1,10-decanediol. One of these diols may be used alone or two or more thereof may be used in combination.

Examples of the aliphatic polyester polyol include polyhexamethylene adipate, polyhexamethylene sebacate, polyhexamethylene dodecanoate, and polybutylene adipate.

The aromatic polyester polyol is preferably one produced through the reaction of an aromatic poly (or di) carboxylic acid with the diol. Examples of the aromatic poly (or di) carboxylic acid include phthalic acid, isophthalic acid, and terephthalic acid. One of these may be used alone or two or more thereof may be used in combination.

Examples of the aromatic polyester polyol include polyalkylene phthalate, polyalkylene isophthalate, and polyalkylene terephthalate.

As the polyol component, the polyether polyol has low viscosity and good handling properties, and is suitable for dissolving the above-described polyester. Since the polyester polyol has high heat resistance, solvent resistance, and high strength, a polyalkylene glycol and a polyester polyol are preferably used in combination.

The average molecular weight of the polyester polyol (C) is preferably from 500 to 5500, more preferably from 1500 to 4500. When the average molecular weight of the polyester polyol (C) is 500 or more, the adhesive strength of the hot-melt adhesive after curing is favorable, and when the average molecular weight is 5500 or less, the viscosity of the hot-melt adhesive or the reactive hot-melt adhesive is low, and the coatability is favorable.

The average molecular weight of the polyester polyol is an average molecular weight calculated from the hydroxyl value.

Isocyanate

Examples of the isocyanate include ethylene diisocyanate, ethylidene diisocyanate, propylene diisocyanate, butylene diisocyanate, hexamethylene diisocyanate, toluene diisocyanate, cyclopentylene-1,3-diisocyanate, cyclohexylene-1,4-diisocyanate, cyclohexylene-1,2-diisocyanate, 4,4'-diphenylmethane diisocyanate, 2,2-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, furfurylidene diisocyanate, 1-chlorobenzene-2,4-diisocyanate, 4,4',4"-triisocyanate-triphenylmethane, 1,3,5-triisocyanate-benzene, 2,4,6-triisocyanate-toluene, and 4,4'-dimethyldiphenylmethane-2,2',5,5'-tetraisocyanate.

Isocyanate having an average of 1 to 3 isocyanate groups per molecule is preferable, and difunctional isocyanates, so-called diisocyanates, are particularly preferable. One of the isocyanate may be used alone or two or more thereof may be used in combination.

Among these, 4,4'-diphenylmethane diisocyanate is preferable from the viewpoint of high adhesive strength after moisture curing.

Monools and monoisocyanates, trifunctional polyols, and trifunctional isocyanates can also be used, but difunctional polyols (diols) and difunctional isocyanates (diisocyanates) are preferable from the viewpoint of the viscosity of the hot-melt adhesive or the reactive hot-melt adhesive.

It is preferable to use 2 mol of a difunctional isocyanate with respect to 1 mol of a difunctional polyol because an intended urethane prepolymer can be manufactured relatively easily.

Content of Each Component in Hot-Melt Adhesive

From the viewpoint of the viscosity and adhesive strength of the hot-melt adhesive, the content of the polyester (A) in the hot-melt adhesive is preferably from 2 to 50 mass%, more preferably from 5 to 40 mass%, still more preferably from 7 to 30 mass% with respect to the total amount of the hot-melt adhesive.

From the viewpoint of the viscosity and adhesive strength of the hot-melt adhesive, the content of the polyalkylene glycol (B) is preferably from 10 to 75 mass%, more preferably from 20 to 60 mass%, still more preferably from 30 to 50 mass% with respect to the total amount of the hot-melt adhesive.

From the viewpoint of the viscosity and adhesive strength of the hot-melt adhesive, the content of the polyester polyol (C) is preferably from 0 to 50 mass%, more preferably from 10 to 40 mass%, still more preferably from 15 to 35 mass% with respect to the total amount of the hot-melt adhesive.

From the viewpoint of the viscosity and adhesive strength of the hot-melt adhesive, the content of isocyanate is preferably from 0.1 to 5 mass%, more preferably from 0.5 to 4 mass%, still more preferably from 1 to 3 mass% with respect to the total amount of the hot-melt adhesive.

Examples of the additional additive include plasticizers, antioxidants, pigments, light stabilizers, flame retardants, catalysts, waxes, wetting agents, thickeners, defoaming agents, and rheology modifiers.

Blending Amount of Each Component in Reactive Hot-Melt Adhesive

From the viewpoint of the viscosity, initial strength, and final strength of the reactive hot-melt adhesive, the blending amount of the polyester (A) used for manufacturing the reactive hot-melt adhesive is preferably from 2 to 50 mass%, more preferably from 5 to 40 mass%, still more preferably from 7 to 30 mass% with respect to the reactive hot-melt adhesive to be produced.

From the viewpoint of the viscosity, initial strength, and final strength of the reactive hot-melt adhesive, the blending amount of the polyalkylene glycol (B) used for manufacturing the reactive hot-melt adhesive is preferably from 10 to 75 mass%, more preferably from 20 to 60 mass%, still more preferably from 30 to 50 mass% with respect to the reactive hot-melt adhesive to be manufactured.

From the viewpoint of the viscosity, initial strength, and final strength of the reactive hot-melt adhesive, the blending amount of the polyester polyol (C) used for manufacturing the reactive hot-melt adhesive is preferably from 0 to 50 mass%, more preferably from 10 to 40 mass%, and still more preferably from 15 to 35 mass% with respect to the reactive hot-melt adhesive to be manufactured.

From the viewpoint of the viscosity, initial strength, and final strength of the reactive hot-melt adhesive, the blending amount of the isocyanate to be used for manufacturing the reactive hot-melt adhesive is preferably from 3 to 30 mass%, more preferably from 5 to 25 mass%, still more preferably from 8 to 20 mass% with respect to the reactive hot-melt adhesive to be manufactured.

Additional Additive

Examples of additional additives that can be contained in the hot-melt adhesive and the reactive hot-melt adhesive include plasticizers such as dioctyl phthalate, dibutyl phthalate, and dioctyl adipate; antioxidants such as phenolic antioxidants, phosphite antioxidants, thioether antioxidants, and amine antioxidants; pigments such as titanium oxide and carbon black; light stabilizers such as benzotriazole, hindered amine, benzoate, and benzotriazole; flame retardants such as halogen-based flame retardants, phosphorus-based flame retardants, antimony-based flame retardants, and metal hydroxide-based flame retardants; metal-based catalysts such as tin-based catalysts (trimethyltin laurate, trimethyltin hydroxide, dibutyltin dilaurate, dibutyltin maleate, and the like), lead-based catalysts (lead oleate, lead naphthenate, lead octenate, and the like), other metal-based catalysts (naphthenic acid metal salts such as cobalt naphthenate, etc.), and amine-based catalysts such as triethylenediamine, tetramethylethylenediamine, tetramethylhexylenediamine, diazabicycloalkenes, dialkylaminoalkylamines, bis(2-dimethylaminoethyl) ether, and dimorpholino diethyl ether; and waxes such as paraffin wax and microcrystalline wax.

In addition, a wetting agent, a thickener, an defoaming agent, a rheology modifier, and the like can also be added as necessary.

3. Application

The adhesive and the hot-melt adhesive described above can be used as a hot-melt adhesive or a reactive hot-melt adhesive, or as a material thereof. It can be used in a field where a known hot-melt adhesive has been used, such as the building interior field (or the building field), the electronic material field, and the automobile interior field.

The application of the hot-melt adhesive and the reactive hot-melt adhesive is suitable in attaching an automobile interior member or attaching a decorative material to a building interior member, but is not particularly limited. The hot-melt adhesive and the reactive hot-melt adhesive can also be used for woodworking, paper processing, fiber processing, general use, and the like.

The hot-melt adhesive and the reactive hot-melt adhesive can be used by using the same method as the method for using a known hot-melt adhesive and the reactive hot-melt adhesive, and the use method thereof is not particularly limited. Further, for example, when an adherend is attached to a base material, the hot-melt adhesive or the reactive hot-melt adhesive may be applied to the base material side and/or the adherend side.

The adherend and the base material may be those usually used, and examples thereof include a molding material, a film sheet, and a fibrous material produced by knitting synthetic fibers or natural fibers with a spinning machine into a sheet shape.

The molding material, the film, and the sheet are not particularly limited, but are preferably thermoplastic resins. Examples thereof include a polyolefin resin, a polyester resin, an acetate resin, a polystyrene resin, an ABS resin, a vinyl chloride resin, and a polycarbonate resin. Examples of the polyolefin resin include polyethylene and polypropylene, and examples of the polyester resin include polyethylene terephthalate and polybutylene terephthalate.

A laminated product produced by bonding an adherend and a base material with the hot-melt adhesive or the reactive hot-melt adhesive can be specifically used for various applications such as building, electronic materials, and automobile fields. To manufacture the laminated product, it is not necessary to use a special apparatus, and the laminated product can be manufactured using a generally known manufacturing apparatus including a conveyor, a coater, a pressing machine, a heater, and a cutting machine. For example, the laminated product can be manufactured as follows. The hot-melt adhesive or the reactive hot-melt adhesive is applied to a base material or an adherend by a coater while the base material and the adherend are conveyed with a conveyor. The temperature at the time of application is controlled to a predetermined temperature by a heater. The adherend is lightly pressed against the base material by a pressing machine, and the adherend and the base material are bonded to each other via the hot-melt adhesive or the reactive hot-melt adhesive. Thereafter, the bonded adherend and the base material are allowed to cool and they are conveyed as they are by a conveyor to solidify the hot-melt adhesive or the reactive hot-melt adhesive. Thereafter, the base material to which the adherend is attached is cut into an appropriate size by a cutting machine.

Since these laminated products have high initial adhesive strength of the hot-melt adhesive and the reactive hot-melt adhesive and are excellent in heat resistance after moisture curing, the base material and the adherend are hardly removed even in summer.

It is also possible for an operator to apply an adhesive without using a coater to manufacture the laminated product.

Examples

Hereinafter, the present invention will be specifically described with reference to Examples. The present invention is not limited to these Examples.

Various measurements and evaluation methods are as follows.

Test Example 1: Adhesive

Adhesives of Examples 1 to 9 and Comparative Examples 1 to 7 described below were prepared, and evaluated according to the items described below.

Example 1

Manufacturing of Polyester (A-1)

A reactor can equipped with a thermometer, a stirrer, a rectifying column, and a nitrogen-introducing tube was charged with 180.7 parts by mass (1.53 mol) of succinic acid and 217.9 parts by mass (0.38 mol) of Pripol 1009 (hydrogenated dimer acid with 36 carbon atoms) as polyvalent carboxylic acids (a1), 241.4 parts by mass (2.68 mol) of 1,4-butanediol as a polyhydric alcohol (a2), and 0.06 parts by mass of tetrabutyl titanate as a catalyst. The temperature was raised over 2.5 hours until the internal temperature reached 265°C, and the mixture was esterified at 265°C for 1.5 hours.

Subsequently, 0.06 parts by mass of tetrabutyl titanate as a catalyst was added, the pressure in the system was reduced to 2.5 hPa, and a polymerization reaction was performed over 1 hour, to produce a polyester (A-1).

Examples 2 to 9 and Comparative Examples 1 to 4

Manufacturing of Polyesters (A-2) to (A-9), (A'-1) to (A'-4)

Polyesters (A-2) to (A-9) and (A'-1) to (A'-4) were produced in the same manner as the polyester (A-1) except that the feed amount of each raw material was changed such that the composition of the finished product was as shown in Table 1.

The composition described in Table 1 below is a finished composition ratio (resin composition ratio), and is a relative ratio (mole ratio and mass ratio) of the content of structural sites derived from respective constituent monomers of the produced polyester. The abbreviations shown in Table 1 are as follows.

Polyvalent carboxylic acid

"SuA": succinic acid (plant-derived monomer)
"SebA": sebacic acid (plant-derived monomer)
"P1009": hydrogenated dimer acid having 36 carbon atoms (Pripol (trade name) 1009, manufactured by Equus Japan Ltd.) (molecular weight: about 570) (plant-derived monomer)
Polyhydric alcohol
"EG": ethylene glycol
"1,4BG": 1,4-butanediol
"1,6HG": 1,6-hexanediol
"3MPG": 3-methyl-1,5-pentanediol
"NPG": neopentyl glycol
"BEPG": 2-butyl-2-ethyl-1,3-propanediol

[Table 1]

Table 1

| | Polyester | Composition | | | | | | | | | | | | | | | | | | |
| | | Polyvalent carboxylic acid | | | | | | Polyhydric alcohol | | | | | | | | | | | | |
| | | SuA | | SebA | | P1009 | | EG | | 1,4BG | | 1,6HG | | 3MPG | | NPG | | BEPG | |
| | | mol% | wt.% | mol% | wt.% | mol% | wt.% | mol% | wt.% | mol% | wt.% | mol% | wt.% | mol% | wt.% | mol% | wt.% | mol% | wt.% |
| Example 1 | A-1 | 80 | 25.6 | | | 20 | 40.8 | | | 100 | 33.6 | | | | | | | | |
| Example 2 | A-2 | 70 | 19.1 | | | 30 | 52.2 | | | 100 | 28.6 | | | | | | | | |
| Example 3 | A-3 | 60 | 14.3 | | | 40 | 60.7 | | | 100 | 25.0 | | | | | | | | |
| Example 4 | A-4 | 80 | 25.4 | | | 20 | 40.5 | | | 86 | 28.7 | | | | | 14 | 5.4 | | |
| Example 5 | A-5 | | | 95 | 58.2 | 5 | 9.7 | | | 100 | 32.1 | | | | | | | | |
| Example 6 | A-6 | | | 90 | 51.7 | 10 | 18.3 | | | 100 | 30.0 | | | | | | | | |
| Example 7 | A-7 | | | 100 | 59.2 | | | | | | | 100 | 40.8 | | | | | | |
| Example 8 | A-8 | | | 100 | 65.6 | | | | | 100 | 34.4 | | | | | | | | |
| Example 9 | A-9 | | | 100 | 64.6 | | | | | 85 | 28.9 | | | 15 | 6.5 | | | | |
| Comparative Example 1 | A'-1 | | | 100 | 58.5 | | | | | 55 | 16.9 | | | | | | | 45 | 24.6 |
| Comparative Example 2 | A'-2 | 50 | 22.6 | 50 | 45.2 | | | 100 | 32.3 | | | | | | | | | | |
| Comparative Example 3 | A'-3 | 100 | 43.5 | | | | | | | 70 | 31.9 | | | | | | | 30 | 24.6 |
| Comparative Example 4 | A'-4 | 70 | 29.8 | 30 | 25.6 | | | | | 100 | 44.6 | | | | | | | | |

19

Comparative Examples 5 to 7

As Comparative Examples 5 to 7, the polyester polyols shown in Table 3 were prepared. In Table 3, the abbreviations are as follows.

"HS2H-351A": adipic acid/1,6-hexanediol (average molecular weight: 3500, manufactured by Hokoku Corporation)
"P-3010": adipic acid/3-methyl-1,5-pentanediol (average molecular weight 3000, manufactured by KURARAY CO., LTD.)
"P-2050": sebacic acid/3-methyl-1,5-pentanediol (average molecular weight 2000, manufactured by KURARAY CO., LTD.)

Evaluation Items

For Examples 1 to 9 and Comparative Examples 1 to 7, the ester bond concentration (hereinafter, also referred to as "ES concentration"), the solubility parameter (SP value), the biomass degree, the melting point (Tm), the crystal melting heat ($\Delta$H), the glass transition temperature (Tg), the mass-average molecular weight (Mw), the acid value, and the hydroxyl value were calculated through the following procedures. In addition, the handleability, solubility, and VOC amount were evaluated. The results are shown in Table 3.

ES Concentration

The ES concentration was determined with a calculated value from the feed amount. In the calculation method, the value is obtained by dividing the smaller number of feed moles of the polyvalent carboxylic acid (a1) and the polyhydric alcohol (a2) by the finished total mass. An example of the calculation equation is shown below.
When the feed amounts of the polyvalent carboxylic acid (a1) and the polyhydric alcohol (a2) are the same molar amount, either of the calculation equations described below may be used.
When Amount of Polyvalent Carboxylic Acid (a1) Is Smaller

$$\text{Ester bond concentration (mmol/g)} = [(A1/\alpha1 \times m1 + A2/\alpha2 \times m2 + A3/\alpha3 \times m3...)/Z] \times 1000$$

A: Feed amount (g) of polyvalent carboxylic acid (a1)
$\alpha$: Molecular weight of polyvalent carboxylic acid (a1)
m: Number of carboxy groups per molecule of polyvalent carboxylic acid (a1)
Z: Mass (g) of finished product

When Amount of Polyhydric Alcohol (a2) Is Smaller

$$\text{Ester bond concentration (mmol/g)} = [(B1/\beta1 \times n1 + B2/\beta2 \times n2 + B3/\beta3 \times n3...)/Z] \times 1000$$

B: Feed amount (g) of polyhydric alcohol (a2)
$\beta$: Molecular weight of polyhydric alcohol (a2)
n: Number of hydroxy groups per molecule of polyhydric alcohol (a2)
Z: Mass (g) of finished product

Solubility Parameter (SP Value)

The solubility parameter (SP value) was determined by a known Fedors method. This method is described in R. F. Fedors, Polym. Eng. Sci., 14(2), 147(1974), and in the structural formula of the polyester (A) to be determined, the evaporation energy and molar volume data of atoms and atomic groups were obtained with the following equation:

$$\text{Solubility parameter} = (\Sigma\Delta ei/\Sigma\Delta vi)^{1/2}$$

where $\Delta ei$ and $\Delta vi$ represent the evaporation energy and the molar volume of atoms or atomic groups, respectively.

Biomass Degree

Method for Calculating Biomass Degree

When polycondensation reaction is involved: Examples 1 to 9 and Comparative Examples 1 to 4 Biomass degree (%) = [(number of moles of carbon of plant-derived monomer calculated from mole ratio between polyvalent carboxylic acid (a1) and polyhydric alcohol (a2) in polyester (A))/(number of moles of carbon of all constituent monomers in polyester (A))] × 100 When polycondensation reaction is not involved: Comparative Examples 5 to 7 Biomass degree (%) = [(number of moles of carbon of plant-derived monomer in polyester (A))/(number of moles of carbon of all constituent monomers in polyester (A))] × 100

Melting Point

The melting point (Tm) was determined through measurement using a differential scanning calorimeter. The measurement was performed under conditions of a measurement temperature range from -90 to 200°C and a temperature rise rate of 10°C/min.

Crystal Melting Heat

The crystal melting heat (ΔH) can be checked with a differential scanning calorimeter, and was calculated from the area of an endothermic peak due to crystal melting observed when measurement was performed in a measurement temperature range from -90 to 200°C and a temperature rise rate of 10°C/min.

Glass Transition Temperature

The glass transition temperature (Tg) was measured using a differential scanning calorimeter. The measurement was performed under conditions of a measurement temperature range from -90 to 200°C and a temperature rise rate of 10°C/min.

Mass-Average Molecular Weight

The mass-average molecular weight (Mw) was measured by using a high performance liquid chromatograph ("ACQUITY APC system" manufactured by Waters Corporation) and a total of four columns in series: one ACQUITY APC XT 450, one ACQUITY APC XT 200, and two ACQUITY APC XT 45, and was determined in terms of standard polystyrene molecular weight.

Acid Value

The acid value (mgKOH/g) was determined by dissolving 1 g of the polyester (A) in 30 g of a mixed solvent of toluene/methanol (e.g., toluene/methanol = 9/1 at a volume ratio), and performing neutralization titration in accordance with JIS K 0070.

Hydroxyl Value

The hydroxyl value was determined through neutralization titration in accordance with JIS K 0070.

Handleability

The handleability was evaluated according to the following criteria shown in Table 2.

[Table 2]

Table 2

| Criteria | | Handleability |
|---|---|---|
| The polyester or polyester polyol has sufficient strength and it is likely that the polyester or polyester polyol can be pelletized. | When the polyester or polyester polyol at ambient temperature is touched with a finger for 10 seconds, there is no tackiness at all, and it is not likely that blocking occurs during storage at ambient temperature. | A |
| | When the polyester or polyester polyol at ambient temperature is touched with a finger for 10 seconds, there is slight tackiness, and it is likely that slight blocking occurs during storage at ambient temperature. | B |
| | When the polyester or polyester polyol at ambient temperature is touched with a finger for 10 seconds, there is tackiness, and it is likely that blocking occurs during storage at ambient temperature. | C |
| The polyester or polyester polyol has no sufficient strength and it is not likely that the polyester or polyester polyol can be pelletized. | It can be handled as a liquid (viscosity: 10000 mPa·s or less) at ambient temperature. | D |
| | It can be handled as a liquid (viscosity: 10000 mPa·s or less) by heating at 80°C. | E |
| | It cannot be handled as a liquid (viscosity: 10000 mPa·s or less) by heating at 80°C. | F |

With respect to the evaluation criteria of handleability, A and D are the most preferable results, B and E are slightly preferable results, and C and F are unpreferable results.

Solubility

The solubility was evaluated according to the following conditions.

A reactor can equipped with a thermometer, a stirrer, a reflux column, and a nitrogen introduction tube was charged with 20 parts by mass of polyester and 80 parts by mass of polypropylene glycol (PPG-1000) having an average molecular weight of about 1000, the temperature was raised over 0.5 hours until the internal temperature reached 120°C, and the contents after being heated and stirred at 120°C for 1 hour were visually observed.

○: Polyester was dissolved

×: Polyester was not dissolved

In the table, "-" indicates unevaluated.

VOC Amount

The VOC amount was measured using a head space gas chromatograph mass spectrometer and calculated according to the following formula.

$$\text{Total of peak areas of all observed volatile components} \times 100/\text{peak area of blank (Air)}$$

In the table, "-" indicates unmeasured.

Equipment used and conditions are as follows.

Head Space Unit

Equipment used: head space sampler G1888 manufactured by Agilent Technologies
Oven temperature: 130°C
Loop temperature: 140°C
Tr.Line temperature: 150°C
GC cycle time: 40 minutes
Vial equilibration time: 30 minutes
Vial pressurization time: 1 minute
Vial volume: 20 mL
Vial pressurization: 15 psi
Loop injection time: 0.04 minutes (injection amount 1 mL)
Loop equilibration time: 0.2 minutes
Sample injection time: 1 minute
Sample shaker: OFF

Gas Chromatograph Unit

Equipment used: 6890 N Network GC system manufactured by Agilent Technologies
Column: DB-17MS (crosslinked methyl siloxane) capillary column
Column temperature conditions: held at 40°C for 5 minutes, then raised to 200°C at 10°C/min, and then held at 200°C for 5 minutes
Injection port: 180°C
Carrier gas: helium
Column flow rate: 1.0 mL/min
Split ratio: 30:1
Transfer line: 220°C

Mass Spectrometer Unit

Equipment used: 5973 inert Mass Selective Detector manufactured by Agilent Technologies
Mass range: from 10 to 600
Ion source temperature: 230°C
Number of samples: 2 times
Quadrupole temperature: 150°C
Number of scans: 2.52/sec
Start time: 0 minutes
EM voltage: relative

Sample amount (vial filling amount): 300 mg

[Table 3]

Table 3

|  | Polyester or polyester polyol | Ester bond concentration | SP value | Biomass degree | Tm | ΔH | Tg | Mw | Acid value | Hydroxyl value | Evaluation | | |
|---|---|---|---|---|---|---|---|---|---|---|---|---|---|
|  |  | (mmol/g) | (cal/cm$^3$)$^{1/2}$ | (%) | (°C) | (J/g) | (°C) |  | (mgKOH/g) | (mgKOH/g) | Handleability | Solubility | VOC amount |
| Example 1 | A-1 | 7.62 | 9.92 | 72.2 | 91 | 37 | -46 | $9.24 \times 10^4$ | < 1 | 1.7 | A | ○ | 4.7 |
| Example 2 | A-2 | 6.50 | 9.68 | 77.3 | 73 | 26 | -48 | $10.76 \times 10^4$ | < 1 | 1.2 | A | ○ | 4.7 |
| Example 3 | A-3 | 5.67 | 9.50 | 80.8 | 60 | 20 | -49 | $8.33 \times 10^4$ | < 1 | 2.1 | A | ○ | 4.4 |
| Example 4 | A-4 | 7.56 | 9.89 | 71.5 | 74 | 32 | -44 | $6.15 \times 10^4$ | < 1 | 4.1 | A | ○ | 4.2 |
| Example 5 | A-5 | 7.28 | 9.88 | 73.9 | 62 | 75 | -53 | $7.47 \times 10^4$ | < 1 | 3.7 | A | ○ | 1.5 |
| Example 6 | A-6 | 6.82 | 9.78 | 75.9 | 59 | 67 | -54 | $7.45 \times 10^4$ | < 1 | 3.8 | A | ○ | 2.7 |
| Example 7 | A-7 | 7.03 | 9.83 | 62.5 | 69 | 90 | -58 | $8.14 \times 10^4$ | < 1 | 4.1 | A | ○ | 5.0 |
| Example 8 | A-8 | 7.80 | 10.00 | 71.4 | 67 | 92 | -55 | $7.71 \times 10^4$ | < 1 | 4.3 | A | ○ | 0.9 |
| Example 9 | A-9 | 7.68 | 9.96 | 70.0 | 57 | 71 | -53 | $9.06 \times 10^4$ | < 1 | 4.5 | A | ○ | 1.9 |
| Comparative Example 1 | A'-1 | 6.95 | 9.74 | 61.6 | 24 | 25 | -57 | $5.66 \times 10^4$ | < 1 | 3.4 | C | ○ | - |
| Comparative Example 2 | A'-2 | 10.74 | 10.69 | 77.8 | 38 | 30 | -40 | $6.19 \times 10^4$ | < 1 | 3.5 | B | × | - |
| Comparative Example 3 | A'-3 | 10.35 | 10.51 | 42.1 | 61 | 23 | -30 | $6.64 \times 10^4$ | < 1 | 2.1 | A | × | - |
| Comparative Example 4 | A'-4 | 10.13 | 10.54 | 59.2 | 86 | 39 | -51 | $5.6 \times 10^4$ | < 1 | 2.8 | A | × | - |

24

EP 4 715 021 A1

| | Polyester or polyester polyol | Ester bond concentration | SP value | Biomass degree | Tm | ΔH | Tg | Mw | Acid value | Hydroxyl value | Evaluation | | |
| --- | --- | --- | --- | --- | --- | --- | --- | --- | --- | --- | --- | --- | --- |
| | | (mmol/g) | $(cal/cm^3)^{1/2}$ | (%) | (°C) | (J/g) | (°C) | | (mgKOH/g) | (mgKOH/g) | Handleability | Solubility | VOC amount |
| Comparative Example 5 | HS2-H-351A | 8.46 | 10.32 | 0.0 | 61 | 102 | -58 | $1.3 \times 10^4$ | < 1 | 32.0 | E | - | 9.0 |
| Comparative Example 6 | P-3010 | 8.40 | 10.24 | 0.0 | - (Amorphous) | - (Amorphous) | -65 | $0.9 \times 10^4$ | < 1 | 37.4 | D | - | 18.9 |
| Comparative Example 7 | P-2050 | 6.60 | 9.99 | 59.1 | - (Amorphous) | - (Amorphous) | -61 | $0.7 \times 10^4$ | < 1 | 56.1 | D | - | 25.8 |

Test Example 2: Reactive Hot-Melt Adhesive

Reactive hot-melt adhesives of Examples 10 to 13 and Comparative Examples 8 and 9 described below were prepared and evaluated in the items described below.

Example 10

Dissolution Step

A four-necked flask equipped with a thermometer, a stirring bar, and a cooling tube was charged with 41.08 parts by mass of polypropylene glycol (PPG-2000) having an average molecular weight of about 2000, 2.99 parts by mass of polypropylene glycol (PPG-400) having an average molecular weight of about 400, 24.45 parts by mass of polyester polyol "HS 2H-351A" (manufactured by Hokoku Corporation, polyester polyol of hexanediol and adipic acid with an average molecular weight of 3500, melting temperature of 55°C, OHV = 32 mgKOH/g), 0.33 parts by mass of "MODAFLOW 2100" (manufactured by Allnex Ltd.) as a defoaming agent, and 23.7 parts by mass of polyester (A-6). The temperature was raised to 130°C over 30 minutes, and the mixture was stirred at 130°C for 1 hour to produce a resin composition in a uniform solution form.

Dehydration Step Under Reduced Pressure

This resin composition was heated and stirred at 15 kPa and 130°C for 1 hour, and dehydrated under reduced pressure.

Urethane Prepolymer Formation Step

After the inside of the system was cooled to 100°C, 14.0 parts by mass of 4,4'-diphenylmethane diisocyanate (MDI) as an isocyanate and 0.1 parts by mass of 2,2'-dimorpholinodiethyl ether (DMDEE) (manufactured by MITSUI FINE CHEMICALS, INC.) as a hardening catalyst were added, and the mixture was stirred at 15 kPa and 100°C for 1 hour. Thereafter, the mixture was cooled, whereby a reactive hot-melt adhesive was produced.

Examples 11 to 13 and Comparative Examples 8 and 9

Reactive hot-melt adhesives of Examples 11 to 13 and Comparative Examples 8 and 9 were produced in the same manner as in Example 10 except that the type and content of each component were changed as shown in Table 4.

Evaluation Items

For Examples 10 to 13 and Comparative Examples 8 and 9, the initial strength and the final strength were evaluated through the following procedures. The results are shown in Table 5.

Initial Adhesive Strength

Two flat rods (wood, width 1.7 cm, length 7.5 cm, thickness 1.5 mm) were prepared, and a hot-melt adhesive heated and melted was applied to one of the flat rods in an area of 1.5 cm $\times$ 1.7 cm with a thickness of 0.36 mm. The other flat rod was superposed thereon, the rods were sandwiched between double clips, and allowed to stand for 5 minutes to cool and solidify the hot-melt adhesive. After standing, the double clip was removed, a tensile shear test was performed under the following measurement conditions using a precision universal testing machine (product name: AG-X, manufactured by Shimadzu Corporation) as a tensile testing machine, and the initial adhesive strength was measured.

Measurement Conditions

Tensile speed: 5.0 mm/min
Measurement temperature: 23°C

Final Adhesive Strength

Two adherends were prepared, and a hot-melt adhesive heated and melted was applied to one adherend in an area of 1.5 cm × 2.5 cm (1.5 cm × 1.7 cm when the adherend was wood) with a thickness of 0.36 mm. The other adherend was superposed thereon, the adherends were sandwiched between double clips and allowed to stand for 3 days to moisture-cure the hot-melt adhesive. After standing, the double clip was removed, a tensile shear test was performed under the following measurement conditions using a precision universal testing machine (product name: AG-X, manufactured by Shimadzu Corporation) as a tensile testing machine, and the final adhesive strength was measured.
In the table, "-" indicates unevaluated.

Measurement Conditions
Tensile speed: 5.0 mm/min
Measurement temperature: 23°C

The adherends used were as follows.

SUS plate (width 2.5 cm, length 10 cm, thickness 1.5 mm)
GFRP plate (width 2.5 cm, length 10 cm, thickness 2 mm)
PC plate (width 2.5 cm, length 10 cm, thickness 2 mm)
Flat rod (wood) (width 1.7 cm, length 7.5 cm, thickness 1.5 mm)

[Table 4]

Table 4

| | Formulation | | | | | | | | | | | | | |
| --- | --- | --- | --- | --- | --- | --- | --- | --- | --- | --- | --- | --- | --- | --- |
| | Polyester (A) | | Polyester polyol | | PPG | | | | Isocyanate | | Catalyst | | Defoaming agent | |
| | Grade | parts by mass | Grade | parts by mass | Grade | parts by mass | Grade | parts by mass | Grade | parts by mass | Grade | parts by mass | Grade | parts by mass |
| Example 10 | A-6 | 23.7 | HS2-H-351A | 24.45 | PP-G-200-0 | 41.08 | PP-G-400 | 2.99 | MDI | 14.0 | DMDEE | 0.1 | Modaflow2100 | 0.33 |
| Example 11 | A-7 | 23.7 | HS2-H-351A | 24.45 | PP-G-200-0 | 41.08 | PP-G-400 | 2.99 | MDI | 14.0 | DMDEE | 0.1 | Modaflow2100 | 0.33 |
| Example 12 | A-8 | 23.7 | HS2-H-351A | 24.45 | PP-G-200-0 | 41.08 | PP-G-400 | 2.99 | MDI | 14.0 | DMDEE | 0.1 | Modaflow2100 | 0.33 |
| Example 13 | A-9 | 23.7 | HS2-H-351A | 24.45 | PP-G-200-0 | 41.08 | PP-G-400 | 2.99 | MDI | 14.0 | DMDEE | 0.1 | Modaflow2100 | 0.33 |
| Comparative Example 8 | - | - | HS2-H-351A | 24.45 | PP-G-200-0 | 41,08 | PP-G-400 | 2.99 | MDI | 14.0 | DMDEE | 0.1 | Modaflow2100 | 0.33 |
| Comparative Example 9 | - | - | HS2-H-351A | 48.15 | PP-G-200-0 | 41.08 | PP-G-400 | 2.99 | MDI | 14.0 | DMDEE | 0.1 | Modaflow2100 | 0.33 |

EP 4 715 021 A1

[Table 5]

Table 5

| | | Reactive hot-melt adhesive properties | | | | |
|---|---|---|---|---|---|---|
| | Polyester (A) | Initial strength | Final strength | | | |
| | | | Mpa | | | |
| | | kPa | SUS | GFRP | PC | Wood |
| Example 10 | A-6 | 496 | 0.87 | 2.14 | 3.40 | 3.43 |
| Example 11 | A-7 | 895 | 0.45 | - | 3.61 | 3.97 |
| Example 12 | A-8 | 841 | 0.86 | - | 3.53 | 3.81 |
| Example 13 | A-9 | 792 | 1.26 | - | 3.80 | 3.58 |
| Comparative Example 8 | - | 78 | 0.10 | 0.14 | 0.09 | 0.47 |
| Comparative Example 9 | - | 678 | 0.05 | 0.16 | 0.07 | 1.73 |

In Comparative Example 8 in which the polyester A was not used, cohesive fracture of the adhesive mainly occurred at the time of measuring the initial strength and the final strength. That is, the adhesive strength was not exhibited because of insufficient cohesive force of the adhesive. On the other hand, in Comparative Example 9 in which the amount of the polyester polyol (HS-2H-351A) was increased instead of the polyester A, interfacial debonding occurred mainly between the adhesive and the adherend at the time of measuring the final strength. That is, although the cohesive force was sufficient, the adhesive strength was not exhibited because of insufficient adhesion of the adhesive to the adherend.

The polyesters of Examples 1 to 9 were excellent in handleability, solubility in liquid polyol, and low VOC characteristics, and were suitable for use as reactive hot-melt adhesives. On the other hand, the polyester A'-1 of Comparative Example 1 in which the melting point of the polyester was less than 30°C was inferior in handleability, and the polyesters of the polyesters A'-2 to A'-4 of Comparative Examples 2 to 4 in which the ester bond concentration of the polyester was higher than 10.00 mmol/g were inferior in solubility in a liquid polyol, and they were difficult to use as a reactive hot-melt adhesive.

The polyester polyols of Comparative Examples 5 to 7 in which the mass-average molecular weight of the polyester was less than 25000 had a large VOC amount.

Further, the reactive hot-melt adhesives of Examples 10 to 13 prepared using the polyesters A-6 to A-9 of Examples 6 to 9 were capable of achieving both of the initial strength and the final strength at a high level, whereas the reactive hot-melt adhesive of Comparative Example 8 not using the polyester (A) was insufficient in cohesive force and inferior in initial strength and final strength. The reactive hot-melt adhesive of Comparative Example 9 in which the polyester (A) was not used but instead the polyester polyol "HS2H-351A" of Comparative Example 5 having a mass-average molecular weight of the polyester of less than 25000 was increased had a cohesive force and excellent initial strength, but was insufficient in interfacial adhesion and inferior in final strength.

The present invention has been described in detail with reference to specific embodiments. However, it would be clear to a person skilled in the art that various changes and modifications can be made without departing from the spirit and scope of the present invention. The present application is based on Japanese Patent Application No. 2023-081086 filed on May 16, 2023, Japanese Patent Application No. 2023-081088 filed on May 16, 2023, and Japanese Patent Application No. 2023-119125 filed on July 21, 2023, the contents of which are incorporated herein by reference.

Industrial Applicability

The polyester used in the adhesive, the hot-melt adhesive, and the reactive hot-melt adhesive of the present embodiment is a resin that is solid at ambient temperature, excellent in handleability, for example, can be handled as a pellet shape, and is soluble in a liquid polyol such as polypropylene glycol generally used in a reactive hot-melt adhesive. Thus, the polyester can be used for a hot-melt adhesive and a reactive hot-melt adhesive.

In addition, because the VOC amount is small, and high biomass design is possible, the adhesive of the present embodiment using the polyester can be suitably used as an adhesive, a hot-melt adhesive, and a reactive hot-melt adhesive that are excellent in low odor characteristics and environmental compatibility.

**EP 4 715 021 A1**

**Claims**

1. An adhesive comprising a polyester (A), the polyester (A) satisfying requirements (1) to (4) described below:

   (1) the polyester (A) has a structural site derived from a polyvalent carboxylic acid (a1) and a structural site derived from a polyhydric alcohol (a2);
   (2) the polyester (A) has an ester bond concentration of 10.00 mmol/g or less;
   (3) the polyester (A) has a melting point of 30°C or higher; and
   (4) the polyester (A) has a mass-average molecular weight of 25000 or more.

2. The adhesive according to claim 1, wherein the polyester (A) further satisfies requirement (5) described below:
   (5) the polyester (A) contains 50 mol% or more of a structural site derived from an aliphatic polyvalent carboxylic acid (a1-1) with respect to a total amount of the structural site derived from a polyvalent carboxylic acid (a1).

3. The adhesive according to claim 1 or 2, wherein the polyester (A) further satisfies requirement (6) described below:
   (6) the polyester (A) has a hydroxyl value of less than 12 mgKOH/g.

4. The adhesive according to claim 1 or 2, wherein the polyester (A) has a solubility parameter (SP value) of 10.50 $(cal/cm^3)^{1/2}$ or less.

5. The adhesive according to claim 1 or 2, wherein the adhesive contains 5 mass% or less of an organic solvent.

6. The adhesive according to claim 1 or 2, wherein the adhesive contains 30 mass% or less of a structural site derived from a monomer having an aromatic ring with respect to a total amount of the polyester (A).

7. The adhesive according to claim 1 or 2, wherein the polyester (A) has a glass transition temperature of 0°C or lower.

8. The adhesive according to claim 1 or 2, wherein the polyester (A) has a crystal melting heat of 3 J/g or higher.

9. The adhesive according to claim 1 or 2, wherein the polyester (A) has a mass-average molecular weight of 30000 or more.

10. The adhesive according to claim 1 or 2, wherein the polyester (A) has a mass-average molecular weight of 40000 or more.

11. A reactive hot-melt adhesive comprising a urethane prepolymer (X) having an isocyanate group, wherein
    the reactive hot-melt adhesive contains the adhesive described in claim 1 or 2.

12. The reactive hot-melt adhesive according to claim 11, wherein the urethane prepolymer (X) has a structural site derived from a polyalkylene glycol (B).

13. The reactive hot-melt adhesive according to claim 12, wherein the polyalkylene glycol (B) has an average molecular weight in a range from 200 to 5000.

14. The reactive hot-melt adhesive according to claim 11, wherein the urethane prepolymer (X) has a structural site derived from a polyester polyol (C) different from the polyester (A).

15. The reactive hot-melt adhesive according to claim 14, wherein the polyester polyol (C) has an average molecular weight in a range from 500 to 5500.

30

## INTERNATIONAL SEARCH REPORT

| International application No. |
|---|
| **PCT/JP2024/017944** |

| A. | CLASSIFICATION OF SUBJECT MATTER |
|---|---|

*C09J 167/00*(2006.01)i; *C09J 175/04*(2006.01)i; *C09J 175/08*(2006.01)i
FI: C09J167/00; C09J175/08; C09J175/04

According to International Patent Classification (IPC) or to both national classification and IPC

| B. | FIELDS SEARCHED |
|---|---|

Minimum documentation searched (classification system followed by classification symbols)

C09J1/00-5/10; C09J9/00-201/10; C08G63/00-64/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)



| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2022-164153 A (MITSUBISHI CHEMICAL CORPORATION) 27 October 2022 (2022-10-27) | 1, 6-10 |
| | claims, paragraphs [0013]-[0092], examples 1-3, comparative example 1 | |
| A | | 2-5, 11-15 |
| X | JP 09-012695 A (HOECHST TREVIRA GMBH & CO. KG) 14 January 1997 (1997-01-14) | 1, 5, 8-10 |
| | claims (in particular, claim 33), paragraph [0064], examples 2b, 6, 8, 9 | |
| X | WO 2018/179689 A1 (TOYOBO CO., LTD.) 04 October 2018 (2018-10-04) | 1, 7-8 |
| | claims, paragraphs [0015]-[0058], examples (polyester resin A-2, example 3) | |
| E, X | JP 2024-085786 A (KURARAY CO., LTD.) 27 June 2024 (2024-06-27) | 1, 5, 7-10 |
| | claims, paragraphs [0010]-[0079], examples 1-6 | |
| A | JP 2022-185595 A (INOAC CORP.) 14 December 2022 (2022-12-14) | 1-15 |
| | paragraph [0047] | |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **24 July 2024** | **06 August 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| International application No. |
| --- |
| **PCT/JP2024/017944** |

| Patent document cited in search report | | | Publication date (day/month/year) | Patent family member(s) | | | Publication date (day/month/year) |
| --- | --- | --- | --- | --- | --- | --- | --- |
| JP | 2022-164153 | A | 27 October 2022 | (Family: none) | | | |
| JP | 09-012695 | A | 14 January 1997 | US | 5736621 | A | |
| | | | | claims (in particular, claim 40), column 11, examples 2b, 6, 8, 9 | | | |
| | | | | EP | 751166 | A2 | |
| | | | | DE | 19523261 | A | |
| | | | | KR | 10-1997-0001412 | A | |
| WO | 2018/179689 | A1 | 04 October 2018 | US | 2020/0063006 | A1 | |
| | | | | claims, paragraphs [0021]-[0064], examples (polyester resin A-2, example 3) | | | |
| | | | | EP | 3561019 | A1 | |
| | | | | CN | 110461983 | A | |
| | | | | KR | 10-2019-0127675 | A | |
| | | | | TW | 201840795 | A | |
| JP | 2024-085786 | A | 27 June 2024 | (Family: none) | | | |
| JP | 2022-185595 | A | 14 December 2022 | US | 2020/0316905 | A1 | |
| | | | | paragraph [0122] | | | |
| | | | | JP | 2019-112570 | A | |
| | | | | US | 2022/0389292 | A1 | |
| | | | | WO | 2019/131507 | A1 | |
| | | | | CN | 111565929 | A | |
| | | | | CN | 115093821 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007523240 T
- JP 2018512472 T
- JP 2008500406 T

- JP 2023081086 A
- JP 2023081088 A
- JP 2023119125 A

**Non-patent literature cited in the description**

- **R. F. FEDORS**. *Polym. Eng. Sci.*, 1974, vol. 14 (2), 147